# EUROPÄISCHE PATENTSCHRIFT

(11) **EP 3 461 753 B1**
(45) Veröffentlichungstag und Bekanntmachung des Hinweises auf die Patenterteilung: **24.06.2020**
(21) Anmeldenummer: 18193234.4
(22) Anmeldetag: 07.09.2018
(51) Int. Cl.: B65B 43/12, B65B 43/26, B65B 43/42, B65B 5/08, B65B 5/10

(54) **VERFAHREN ZUM AUTOMATISCHEN ÖFFNEN EINES TRAGMITTELS SOWIE EINE VORRICHTUNG ZUR DURCHFÜHRUNG DES VERFAHRENS**
METHOD FOR AUTOMATICALLY OPENING A LOAD CARRIER AND DEVICE FOR CARRYING OUT THE METHOD
PROCÉDÉ D'OUVERTURE AUTOMATIQUE D'UN MOYEN DE SUPPORT AINSI QUE DISPOSITIF DE MISE EN OEUVRE DUDIT PROCÉDÉ

(30) Priorität: 28.09.2017 CH 11892017
(43) Veröffentlichungstag der Anmeldung: 03.04.2019
(73) Patentinhaber: FERAG AG, 8340 Hinwil (CH)
(72) Erfinder: Brunschwiler, Othmar, 9553 Bettwiesen (CH)
(74) Vertreter: Frei Patent Attorneys

(56) Entgegenhaltungen:
- EP-A1- 2 918 501
- WO-A1-2016/197176
- US-A1- 2007 074 492
- US-A1- 2013 259 405
- US-A1- 2014 331 619
- US-A1- 2017 217 621

## Beschreibung

Die vorliegende Erfindung liegt auf dem Gebiet der automatisierten Kommissionierung. Sie betrifft ein Verfahren sowie eine Vorrichtung zur automatisierten Handhabung und Förderung eines Tragmittels, wie zum Beispiel einer Tragetasche.

Auf dem Gebiet des Online-Handels etablieren sich zunehmend auch Online-Supermärkte, welche sich als Alternative zu den herkömmlichen Supermärkten präsentieren und entsprechend auch ein für Supermärkte übliches Sortiment anbieten, wie z.B. Nahrungsmittel, Körperpflegeartikel, Haushaltsartikel, Papeteriewaren, etc.

Ein Vorteil des Online-Supermarktes liegt darin, dass sich der Kunde über ein Online-Portal seinen Einkauf von zu Hause aus oder von unterwegs zusammenstellen und diesen über einen Liefer-Service nach Hause oder an eine Abholstelle liefern lassen kann.

Die bestellten Waren werden in Tragmitteln, wie beispielsweise Tragetaschen, ausgeliefert, wie sie auch in konventionellen Supermärkten zum Einpacken der Einkäufe an den Kassen erhältlich sind.

Bei den Tragetaschen handelt es sich in der Regel um flach zusammengefaltete Tragetaschen, welche vor dem Befüllen mit den Einkäufen zuerst geöffnet und auseinander gefaltet werden müssen.

Die Kommissionierung der bestellten Waren in die Tragmittel, wie Tragetaschen, erfolgt in der Regel in automatisierten Logistikzentren.

Obwohl die Tragmittel, wie Tragetaschen, in der Regel dauerhaft sind und eine ansprechende Reissfestigkeit aufweisen, sind diese oftmals zu wenig robust, um als Förder- bzw. Transportbehälter zwecks Kommissionierung entlang einer Kommissionierungsstrecke gefördert zu werden.

Dennoch soll die Kommissionierung aus praktischen Gründen direkt in das Tragmittel erfolgen.

Die Veröffentlichungsschrift WO 2016/197176 A1 beschreibt ein Verfahren zum Kommissionieren von Waren in Säcke. Die Säcke werden zur Kommissionierung in kistenförmige Lade- und Transporthilfsmittel eingebracht. Die Lade- und Transporthilfsmittel stützen die Säcke zur Seite sowie zum Boden hin und reduzieren auf diese Weise das Risiko einer Beschädigung der Säcke beispielsweise beim Befüllen der Säcke mit Waren.

Offenhaltemittel sorgen dafür, dass die Säcke während der Kommissionierung geöffnet bleiben, bzw. nicht wieder zusammenfalten.

Die Tragmittel, wie Tragetaschen, werden gemäss Stand der Technik in der Regel manuell geöffnet und in die Lade- und Transporthilfsmittel eingebracht.

Das manuelle Öffnen der Tragmittel sowie das Beschicken der Transportbehälter mit Tragmitteln ist jedoch ausgesprochen zeit- und personalintensiv. Zudem handelt es sich hierbei um eine monotone, niedrig qualifizierte Tätigkeit, welcher vergleichsweise hohe Personalkosten entgegenstehen.

Im Stand der Technik gibt es durchaus Lösungen Tragetaschen zwecks Befüllen mit Waren in einem automatisierten Verfahren zu öffnen.

So beschreibt die Veröffentlichungsschrift EP 2 918 501 A1 ein Verfahren zum automatisierten Öffnen einer flach zusammengefalteten Tragetasche. Hierzu wird in einem ersten Schritt der Taschenboden mittels eines Sauggreifers aufgeklappt. In einem zweiten Schritt wird zum vollständigen Auseinanderfalten der Tragetasche Blasluft von oben durch die Taschenöffnung geblasen.

Dieses Verfahren weist den Nachteil auf, dass durch das Umklappen des Bodens alleine die Taschenöffnung noch nicht ausreichend freigegeben wird. Dadurch wird das Einbringen von Blasluft erschwert.

Es ist nun Aufgabe der vorliegenden Erfindung, ein Verfahren sowie eine dazugehörige Vorrichtung zum Bereitstellen und Öffnen von Tragmitteln, wie Tragetaschen, insbesondere Falttaschen, sowie zum Beschicken von Lade- und Transporthilfsmitteln mit Tragmitteln, vorzuschlagen, welches vollautomatisch abläuft.

Die Aufgabe wird mit den Merkmalen der unabhängigen Ansprüche 1 und 13 gelöst. Die abhängigen Ansprüche sowie die Beschreibung und die Figuren beinhalten besondere Ausführungsformen und Weiterbildungen der Erfindung.

Das erfindungsgemässe Verfahren zum automatisierten Öffnen von Tragmitteln und Bereitstellen der Tragmittel in behälterartigen Lade- und Transporthilfsmitteln umfasst die folgenden Schritte:
- Zuführen von flach geschlossenen bzw. zusammengedrückten Tragmitteln, insbesondere von einem Stapel von flach geschlossenen Tragmitteln, zu Haltemitteln einer ersten Fördervorrichtung mittels einer Tragmittelzufuhrvorrichtung;
- Fördern der von Haltemitteln gehaltenen, flach geschlossenen Tragmitteln von der Tragmittelzufuhrvorrichtung mittels der ersten Fördervorrichtung zu einer Tragmittelöffnungsvorrichtung;
- Öffnen und Auseinanderfalten der flach geschlossenen Tragmittel mittels der Tragmittelöffnungsvorrichtung;
- Einbringen der Tragmittel in die Lade- und Transporthilfsmittel mittels einer Zusammenführvorrichtung;
- Wegfördern der Lade- und Transporthilfsmittel mit den in diesen angeordneten, geöffneten Tragmitteln mittels einer zweiten Fördervorrichtung.

Die flach geschlossenen Tragmittel werden zum Öffnen insbesondere aus den Haltemitteln der ersten Fördervorrichtung an die Tragmittelöffnungsvorrichtung übergeben.

Der Ausdruck "flach geschlossen" bedeutet insbesondere, dass die Tragmittel in geschlossenem Zustand als flacher Körper vorliegen bzw. flach zusammengedrückt sind. So kann das Tragmittel beispielsweise flach zusammengefaltet sein.

Das Tragmittel weist in geöffnetem Zustand insbesondere Tragmittelwände auf. Das Tragmittel weist ferner im geöffneten Zustand insbesondere einen Tragmittelboden auf. Die Tragmittelwände bilden zusammen mit dem Tragmittelboden einen Tragmittelinnenraum aus.

Ferner enthält das Tragmittel eine Tragmittelöffnung. Diese bildet einen Zugang zum Tragmittelinnenraum aus.

Die Tragmittelöffnung entspricht der Befüllöffnung zum Einbringen der zu kommissionierenden Waren in den Tragmittelinnenraum.

Die Tragmittelöffnung ist in hängender oder stehender Position der Tragmittel oben angeordnet bzw. nach oben weisend.

Das Tragmittel kann zum Beispiel eine faltbare bzw. zusammenklappbare Box sein. Entsprechend sind die Tragmittelwände steif ausgebildet.

Das Tragmittel ist jedoch insbesondere eine Tragetasche. Entsprechend sind die Tragmittelwände flexibel bzw. biegsam ausgebildet.

Das Tragmittel kann aus Papier, Karton oder Kunststoff bestehen oder dieses enthalten. Die Tragmittelwände können einschichtig aufgebaut sein oder als Schichtverbund vorliegen.

Besteht das Tragmittel aus Karton oder enthält diesen, so ist das Tragmittel insbesondere eine Schachtel bzw. ein Karton.

Die Tragetaschen können ferner auch als Gewebetaschen vorliegen.

Das Tragmittel ist hinsichtlich seiner Grösse grundsätzlich nicht eingeschränkt, jedoch bezieht sich die Erfindung im Besonderen auf Tragmittel, die im Handel für den manuellen Transport von Waren, insbesondere Einkäufen - also zum Tragen - vorgesehen sind. Solche Tragmittel weisen daher insbesondere ein Volumen von etwa 10 bis 40 Litern auf.

Die Tragmittel sind insbesondere derart ausgebildet, dass diese im geöffneten und insbesondere leeren Zustand von selbst stehen.

Die Tragmittel können Haltegriffe zum Tragen aufweisen. Die Haltegriffe können an den Tragmittelwänden angebracht, als Öffnungen bzw. Durchbrüche in die Tragmittelwände eingelassen oder als von den Tragmittelwänden vorstehende Traghenkel ausgebildet sein.

Die Traghenkel können in den Tragmittelinnenraum einklappbar sein. Die Traghenkel können zur Aussenseite der Tragmittelwand ausklappbar sein.

Die Tragmittel können allerdings auch ohne Haltegriffe auskommen und zum Tragen beispielsweise am Tragmittelboden und/oder an den Tragmittelwänden ergriffen werden.

Die Tragmittel sind insbesondere so genannte Gebinde. Diese zeichnen sich insbesondere dadurch aus, dass z. B. in die Tragmittel kommissionierte Waren mit bzw. in den Tragmitteln ausgeliefert werden, z. B an den Besteller der Waren. Die Tragmittel bzw. Gebinde zeichnen sich insbesondere dadurch aus, dass die kommissionierten Waren systemübergreifend mit bzw. in den Tragmitteln bzw. Gebinden transportiert werden können.

Das als Tragetasche ausgebildete Tragmittel weist insbesondere eine Vorderwand und eine dieser gegenüber liegende Rückwand sowie zwei einander gegenüber liegende Seitenwände und einen Taschenboden auf.

Die Seitenwände bilden insbesondere die kurzen bzw. schmalen Seiten der Tragetasche aus, während die Vorder- und Rückseite die langen bzw. breiten Seiten der Tragetasche ausbilden.

Bei flach zusammenfaltbaren Tragetaschen enthalten die Taschenseitenwände insbesondere jeweils einen Längsfalz, entlang welchen die Tragetaschen flach zusammenfaltbar sind. Der Längsfalz erstreckt sich in der Taschenseitenwand insbesondere vom Taschenboden bis zur Taschenöffnung.

Ferner weist die Tragetasche eine Taschenöffnung auf. Diese liegt dem Taschenboden gegenüber.

Der Taschenboden liegt der Vorder- oder Rückwand im flach zusammengefalteten Zustand der Tragetasche insbesondere umgeklappt an.

Im Rahmen der Erfindung wird der Begriff "Tragetasche" im Besonderen auch synonymisch für die Begriffe "Sack", "Beutel" oder "Tüte" verwendet.

Die flach geschlossenen Tragmittel werden insbesondere mittels eines Sauggreifers vom Stapel abgetrennt und an die Haltemittel übergeben.

Der Sauggreifer wird hierzu über einen Bewegungsmechanismus zwischen dem Stapel und den Haltemitteln der ersten Fördervorrichtung bewegt.

Die Haltemittel übernehmen die Tragmittel und halten diese zwecks Weiterförderung. Das Haltemittel übernimmt jeweils insbesondere ein einzelnes Tragmittel.

Die Haltemittel sind insbesondere Greifer. Greifer umfassen definitionsgemäss auch Halteklammern. Die Haltemittel können allerdings auch Haltehaken, Haltenadeln, Haltelaschen, oder Teile einer Klettverbindung sein.

Gemäss einer Weiterbildung der Erfindung erfasst der Sauggreifer jeweils ein einzelnes Tragmittel an einer Stapelstirnseite und bewegt dieses in einen Transferbereich. Die Stapelstirnseite kann eine Stapelvorder- oder Stapelunterseite sein. Das Tragmittel wird im Transferbereich vom Sauggreifer an ein Haltemittel übergeben.

Ist das Haltemittel ein Greifer, so führt der Sauggreifer das Tragmittel insbesondere mit einem Tragmittelabschnitt in den offenen Greifer ein. Der Greifer wird anschliessend geschlossen und ergreift das Tragmittel. Sobald der Greifer das Tragmittel ergriffen hat, löst sich der Sauggreifer vom Tragmittel. Der Sauggreifer bewegt sich zwecks Erfassen eines nächsten Tragmittels wieder zurück zum Stapel.

Der Sauggreifer umfasst insbesondere wenigstens einen Saugkopf. Dieser ist mit einem Unterdruck-Erzeuger verbunden, welcher am Saugkopf einen Unterdruck erzeugt. Der Unterdruck sorgt dafür, dass der Sauggreifer die Tragmittel erfassen kann.

Zum Lösen der Tragmittel vom Sauggreifer bzw. vom Saugkopf wird der Unterdruck reduziert bzw. aufgehoben.

Der Stapel kann beispielsweise auf einer Auflage der Tragmittelzuführvorrichtung liegend angeordnet sein. Sowohl die vordere wie auch die hintere Flächenseite des Stapels sind insbesondere abgestützt. Der Stapel kann auch seitlich abgestützt sein.

Die Haltemittel sind jeweils insbesondere an einem Förderorgan angeordnet, welches entlang einer Förderstrecke bewegbar ist. Die Haltemittel und Förderorgane bilden jeweils eine Fördereinheit aus. Das Förderorgan umfasst jeweils insbesondere ein einzelnes Haltemittel.

Das Förderorgan ist insbesondere ein Förderwagen mit Laufrollen, welcher entlang einer Führungsschiene bewegbar bzw. abrollbar ist.

Der Förderwagen kann gemäss einer besonderen Ausführungsform zwei entlang der Bewegungsrichtung bzw. in Schienenlängsrichtung hintereinander angeordnete und voneinander beabstandete Wagenkörper aufweisen, welche über einen Verstrebungskörper, wie Verbindungsstrebe, miteinander verbunden sind. Die beiden Wagenkörper weisen jeweils insbesondere mindestens eine Laufrolle auf. Ein solcher Förderwagen zeichnet sich durch eine hohe Stabilität und Laufruhe aus.

Die Förderorgane sind jeweils insbesondere unabhängig voneinander entlang der Förderstrecke bewegbar.

Die erste Fördervorrichtung ist insbesondere als Rundlauf ausgebildet, in welchem die Fördereinheiten entlang einer geschlossenen Förderstrecke gefördert werden.

Die Haltemittel werden zwecks Übernahme der flach geschlossenen Tragmittel insbesondere über eine Bereitstelleinheit gesteuert in den Transferbereich gefördert. Die Bereitstelleinheit dient der Bereitstellung der Haltemittel im Transferbereich zum Transferieren von Tragmittel zu den Haltemitteln. Die Bereitstelleinheit ist insbesondere ein Schneckenförderer.

Der Schneckenförderer enthält eine um eine Drehachse drehbare Förderschnecke. Entlang des Aussenumfanges der Förderschnecke ist eine wendel- bzw. schraubenlinienförmig ausgebildete Führungsnut angeordnet.

Die Führungsnut dient der Aufnahme eines am Förderorgan angeordneten Mitnahmeelements, wie Mitnahmenockens. Dieser greift in die Führungsnut ein und wird zusammen mit der Fördereinheit durch die sich mit der Förderschnecke drehenden Führungsnut entlang der Drehachse der Förderschnecke mitgenommen und in den Transferbereich gefördert.

Die Fördereinheiten werden im Anschluss an die Übernahme der Tragmittel insbesondere durch die Förderschnecke aus dem Transferbereich herausgefördert.

In Förderrichtung betrachtet vor dem Schneckenförderer ist insbesondere eine Freigabestation angeordnet sein, welche mit einer Steuerung zusammenwirkt und die Fördereinheiten einzeln in den Transferbereich entlässt.

Die Freigabestation dient insbesondere dazu, einzelne Fördereinheiten gesteuert, insbesondere getaktet in den Transferbereich freizugeben.

Die Freigabestation enthält insbesondere ein durch die Steuerung schaltbares Rückhalteelement, mittels welchem die Fördereinheiten in Förderrichtung betrachtet vor dem Transferbereich zurückgehalten werden. Durch Schalten des Rückhalteelementes zwischen einer Rückhalte- und Freigabeposition können einzelne Fördereinheiten in den Transferbereich freigegeben werden.

In Förderrichtung betrachtet vor dem Schneckenförderer bzw. der Freigabestation wird insbesondere eine Staustrecke ausgebildet, in welcher Förderorgane mit leeren Haltemitteln gestaut werden. Die Staustrecke verläuft insbesondere entlang eines Gefälles.

Die Tragmittel werden im Transferbereich insbesondere in einer hängenden Position den Haltemitteln übergeben. Hierbei nimmt jeweils ein Haltemittel ein einzelnes Tragmittel auf.

Die Tragmittelöffnung weist hierbei insbesondere nach oben. Die Tragmittelöffnung ist insbesondere zum Haltemittel in gerichtet.

Die flach geschlossenen Tragmittel werden insbesondere hängend in die Tragmittelöffnungsvorrichtung gefördert.

Die Fördereinheiten mit den flach geschlossenen Tragmitteln werden insbesondere über einen Takter getaktet in einen Öffnungsbereich in der Tragmittelöffnungsvorrichtung gefördert. Die Fördereinheiten mit den flach geschlossenen Tragmitteln werden im Öffnungsbereich insbesondere in einer bestimmten Öffnungsposition positioniert.

Der Takter kann einen Schneckenförderer umfassen. Der Schneckenförderer enthält eine um eine Drehachse drehbare Förderschnecke. Entlang des Aussenumfanges der Förderschnecke ist eine wendel- bzw. schraubenlinienförmig ausgebildete Führungsnut angeordnet.

Die Führungsnut dient der Aufnahme eines am Förderorgan angeordneten Mitnahmeelements, wie Mitnahmenockens. Dieser greift in die Führungsnut ein und wird zusammen mit der Fördereinheit durch die sich mit der Förderschnecke drehenden Führungsnut entlang der Drehachse der Förderschnecke mitgenommen und in den Öffnungsbereich bzw. in die Öffnungsposition gefördert.

Die Fördereinheiten werden im Anschluss an das Öffnen und die Übergabe der Tragmittel an die Lade- und Transporthilfsmittel insbesondere durch die Förderschnecke wieder aus dem Öffnungsbereich herausgefördert.

In Förderrichtung betrachtet vor dem Schneckenförderer kann eine Freigabestation angeordnet sein, welche mit einer Steuerung zusammenwirkt und die Fördereinheiten mit den flach geschlossenen Tragmitteln einzeln in den Öffnungsbereich freigibt.

Die Freigabestation dient insbesondere dazu, einzelne Fördereinheiten mit flach geschlossenen Tragmitteln getaktet in den Öffnungsbereich freizugeben.

Die Freigabestation enthält insbesondere ein durch die Steuerung schaltbares Rückhalteelement, mittels welchem die Fördereinheiten in Förderrichtung betrachtet eingangs der Öffnungsvorrichtung zurückgehalten werden. Durch Schalten des Rückhalteelementes zwischen einer Rückhalte- und Freigabeposition können einzelne Fördereinheiten in den Öffnungsbereich freigegeben werden.

In Förderrichtung betrachtet vor dem Schneckenförderer bzw. der Rückhaltestation wird insbesondere eine Staustrecke ausgebildet, in welcher die mit flach geschlossenen Tragmitteln bestückten Fördereinheiten gestaut werden. Die Staustrecke verläuft insbesondere entlang eines Gefälles.

Die flach geschlossenen Tragmittel werden in der Tragmittelöffnungsvorrichtung insbesondere in hängender Position geöffnet.

Gemäss einer besonderen Weiterbildung der Erfindung werden die Tragmittel in der Tragmittelöffnungsvorrichtung in einem zweistufigen Öffnungsverfahren geöffnet.

In einem ersten Öffnungsschritt werden zwei, einander gegenüber liegende Tragmittelwände eines Tragmittels mittels eines Separier-Mechanismus separiert bzw. auseinander gezogen. Bei diesem Schritt werden die Tragmittelwände voneinander distanziert. Dabei wird im Bereich der geschlossenen Tragmittelöffnung wenigstens ein Öffnungsspalt freigegeben bzw. die Tragmittelöffnung freigegeben.

Ist das Tragmittel eine Tragetasche, so handelt es sich bei den einander gegenüber liegenden Taschenwänden insbesondere um die Taschenvorderwand und Taschenrückwand.

Die beiden Tragmittelwände werden insbesondere mittels Sauggreifer, welche Teil des Separier-Mechanismus sind, separiert.

Hierzu werden insbesondere jeweils mindestens ein Sauggreifer zu einer Aussenseite der zwei einander gegenüber liegenden Tragmittelwände hin bewegt wird, und die Tragmittelwände werden jeweils an den Aussenseiten von den Sauggreifern erfasst, und die Sauggreifer werden unter Auseinanderziehen der Tragmittelwände voneinander distanziert.

Der Separier-Mechanismus umfasst hierzu insbesondere mindestens einen ersten Sauggreifer zum Erfassen einer ersten Tragmittelwand und mindestens einen zweiten Sauggreifer zum Erfassen einer gegenüber liegenden zweiten Tragmittelwand.

Das flach geschlossene Tragmittel wird hierzu vor dem ersten Öffnungsschritt mit dem mindestens einen ersten und dem mindestens einen zweiten Sauggreifer derart zusammengeführt, dass das Tragmittel zwischen dem mindestens einen ersten und dem mindestens einen zweiten Sauggreifer zu liegen kommt.

Der mindestens eine erste und mindestens eine zweite Sauggreifer sind insbesondere einander gegenüber liegend angeordnet.

Zum Erfassen der Tragmittelwände wird die Distanz zwischen dem mindestens einen ersten und mindestens einem zweiten Sauggreifer verkleinert.

Der mindestens eine erste und mindestens eine zweite Sauggreifer können zum Erfassen der Tragmittelwände entsprechend gegeneinander gedrückt werden. Auf diese Weise kann auf einen Gegenhalter verzichtet werden.

Die genannten Sauggreifer erfassen die Tragmittelwände insbesondere an ihren Aussenseiten.

Hierzu wird jeweils insbesondere der mindestens eine erste oder sowohl der mindestens eine erste als auch der mindestens eine zweite Sauggreifer zur entsprechenden Aussenseite der genannten Tragmittelwände hin bewegt. Die Tragmittelwände werden von den sich ihren Aussenseiten annähernden Sauggreifer erfasst.

Bei diesem Vorgang wird der mindestens eine erste oder sowohl der mindestens eine erste als auch der mindestens eine zweite Sauggreifer unter Verkleinerung der Distanz zwischen dem mindestens einen ersten und mindestens einen zweiten Sauggreifer zum gegenüber liegenden Sauggreifer hin bewegt.

Nachdem die Sauggreifer die Tragmittelwände erfasst haben, werden diese unter Separierung der Tragmittelwände voneinander distanziert. Hierzu wird der mindestens eine erste oder sowohl der mindestens eine erste als auch der mindestens eine zweite Sauggreifer vom gegenüber liegenden Sauggreifer wegbewegt.

Die genannten Sauggreifer können entlang eines linearen oder bogenförmigen Bewegungspfades bewegt werden. So können die Sauggreifer beispielsweise schwenkbar gelagert sein. Kombinierte Bewegungsmuster sind ebenfalls möglich.

Die genannten Sauggreifer umfassen jeweils insbesondere mindestens einen Saugkopf. Dieser ist insbesondere an einen Unterdruck-Erzeuger angeschlossen, welcher am Saugkopf einen Unterdruck erzeugt. Der Unterdruck sorgt dafür, dass der Sauggreifer die Tragmittelwand erfassen und halten kann.

Zum Lösen der Tragmittelwand vom Sauggreifer bzw. vom Saugkopf wird der Unterdruck reduziert bzw. aufgehoben.

Das Auseinanderziehen der Tragmittelwände dient insbesondere der Freigabe einer Tragmittelöffnung bzw. wenigstens eines Öffnungsspaltes der Tragmittelöffnung, durch welche bzw. durch welchen ein Wirkmittel zum vollständigen Öffnen der Tragmittel einwirken kann, wie nachfolgend noch beschrieben.

Gemäss einer besonderen Ausführungsform dienen die Sauggreifer auch der Übergabe bzw. dem Transfer der Tragmittel von der ersten Fördervorrichtung in die Lade- und Transporthilfsmittel.

Hierzu werden die Tragmittel von den Haltemitteln gehalten in den Öffnungsbereich gefördert.

Nachdem die Sauggreifer die Tragmittel zwecks Öffnung der Tragmittel erfasst haben, werden die Tragmittel von den Haltemitteln gelöst bzw. von diesen entlassen. Dies geschieht vor dem Einbringen der Tragmittel in die Lade- und Transporthilfsmittel und insbesondere vor dem vollständigen Öffnen der Tragmittel. Die Tragmittel werden nun insbesondere nur noch von den Sauggreifern gehalten.

Die Sauggreifer werden erst wieder von den Tragmitteln gelöst, wenn die Tragmittel durch die Zusammenführvorrichtung in die Lade- und Transporthilfsmittel eingebracht worden sind und von diesen gehalten werden bzw. nach unten abgestützt werden.

In einem zweiten Öffnungsschritt wird das Tragmittel mittels eines durch die Tragmittelöffnung bzw. durch deren Öffnungsspalt in den Tragmittelinnenraum einwirkenden Wirkmittels vollständig geöffnet. Das Wirkmittel ist Teil eines Wirkmittel-Mechanismus.

Handelt es sich bei dem Tragmittel um eine flach zusammengefaltete Tragetasche, so entspricht das vollständige Öffnen der Tragetasche im zweiten Öffnungsschritt einem vollständigen Auseinanderfalten der Tragetasche.

Beim Auseinanderfalten wird insbesondere auch ein zur Vorder- oder Rückwand umgeklappter Boden aufgeklappt, wodurch erst das vollständige Auseinanderfalten der Tragetasche möglich wird.

Der Boden wird beim Separieren der Taschenwände mittels des Separier-Mechanismus nämlich nicht zwingend aufgeklappt.

Das Wirkmittel wirkt durch die Tragmittelöffnung, insbesondere von oben in den Tragmittelinnenraum.

Das Wirkmittel kann ein Wirkmedium, wie Blasluft sein, welches in den Tragmittelinnenraum einwirkt bzw. in diesen eingeblasen wird.

Der Separier-Mechanismus bzw. Wirkmittel-Mechanismus umfasst hierzu ein Blasluftsystems zum Einblasen der Blasluft in den Tragmittelinnenraum. Die Blasluft wird insbesondere durch die Tragmittelöffnung bzw. durch deren Öffnungsspalt in den Tragmittelinnenraum eingeblasen.

Durch den erzeugten Überdruck im Tragmittelinnenraum wird das Tragmittel aufgebläht und auf diese Weise vollständig geöffnet.

Der Begriff "Luft" steht an dieser Stelle stellvertretend für irgendein geeignetes Gas oder Gasgemisch.

Das Wirkmittel kann allerdings auch ein Wirkkörper sein, welcher in den Tragmittelinnenraum eingebracht bzw. eingeführt wird. Der Wirkkörper ist insbesondere Teil des Wirkmittel-Mechanismus'.

Gemäss dieser Ausführungsvariante wird der Wirkkörper durch die Tragmittelöffnung bzw. durch deren Öffnungsspalt, insbesondere von oben, in den Tragmittelinnenraum eingebracht bzw. in diesen eingeführt.

Der Wirkkörper kann beispielsweise ein aufblähbarer Wirkkörper, eine Öffnungsbürste, ein Öffnungsstössel oder eine Öffnungsrolle aus Schaumstoff sein. Der Öffnungsstössel kann z. B. seitlich ausschwenkbare Öffnungsrollen aufweisen.

Der Wirkkörper hat die Aufgabe, unter vollständigem Öffnen des Tragmittels die Tragmittelwände nach aussen zu verdrängen.

Bei einem aufblähbaren Wirkkörper wird dies durch Aufblähen des Wirkkörpers im Tragmittelinnenraum erreicht. Durch das Aufblähen des Wirkkörpers wird dessen Volumen vergrössert, wodurch die Tragmittelwände nach aussen verdrängt werden.

Der aufblähbare Wirkkörper ist insbesondere flexibel. Der aufblähbare Wirkkörper kann ein Ballon, ein Sack oder ein poröser Körper sein. Der aufblähbare Wirkkörper kann beispielsweise mittels eines Gases, wie Luft, aufgebläht bzw. aufgeblasen werden. Der aufblähbare Wirkkörper ist insbesondere reversibel aufblähbar.

Es ist überdies auch möglich, mehrere Wirkmittel miteinander zu kombinieren. Eine besondere Kombination besteht in der Anwendung eines Wirkmediums, wie Blasluft, zusammen mit einem Wirkkörper, wie Öffnungsstössel.

Der Separier-Mechanismen und der Wirkmittel-Mechanismus sind Teil der Tragmittelöffnungsvorrichtung.

Ein weiterer Aspekt der Erfindung betrifft das Einbringen der Tragmittel in die Lade- und Transporthilfsmittel mittels einer Zusammenführvorrichtung.

Die Tragmittel werden insbesondere in der Tragmittelöffnungsvorrichtung in die Lade- und Transporthilfsmittel eingebracht.

Die Tragmittel werden insbesondere in flach geschlossenem Zustand in die Lade- und Transporthilfsmittel eingebracht. Dass heisst, sie werden vor ihrer Öffnung in die Lade- und Transporthilfsmittel eingebracht.

Das heisst, die Tragmittel werden erst geöffnet, wenn diese bereits in den die Lade- und Transporthilfsmitteln angeordnet bzw. plaziert sind.

Es kann allerdings auch vorgesehen sein, dass die Tragmittel erst im Anschluss an den Öffnungsvorgang, das heisst im geöffneten Zustand in die Lade- und Transporthilfsmittel eingebracht werden.

Ist allerdings die Abmessung des Aufnahmeraums des Lade- und Transporthilfsmittels exakt auf die Aussenabmessung der Tragmittel abgestimmt, so dürfte sich ein passgenaues Plazieren der geöffneten Tragmittel in den Lade- und Transporthilfsmitteln als eher schwierig bzw. umständlich erweisen.

Die Tragmittel werden insbesondere in hängender Position in die Lade- und Transporthilfsmittel eingebracht.

Die Tragmittel werden mit wenigstens einem bodenseitigen Tragmittelabschnitt in die Lade- und Transporthilfsmittel eingebracht.

Die Tragmittel werden insbesondere in ihrer Öffnungsposition in der Tragmittelöffnungsvorrichtung in die Lade- und Transporthilfsmittel eingebracht.

Gemäss einer Weiterbildung der Erfindung werden die Tragmittel vom Separier-Mechanismus bzw. von dessen Sauggreifern erst freigegeben, wenn sich diese einerseits im Lade- und Transporthilfsmittel befinden und andererseits geöffnet sind.

Gemäss einer besonderen Ausführungsform werden die Lade- und Transporthilfsmittel mittels der Zusammenführvorrichtung zu den in der Tragmittelöffnungsvorrichtung hängend gehaltenen Tragmittel hoch bewegt und die Tragmittel so in die Lade- und Transporthilfsmittel eingebracht.

Das heisst, die Tragmittel werden nicht in die Lade- und Transporthilfsmittel hinein bewegt, sondern die Lade- und Transporthilfsmittel werden zu den Tragmitteln hin bewegt.

Die Zusammenführvorrichtung umfasst beispielsweise ein Auflageorgan für die Lade- und Transporthilfsmittel. Das Auflageorgan und mit diesem entsprechend auch das auf dem Auflageorgan angeordnete Lade- und Transporthilfsmittel ist mittels eines Hebemechanismus in Richtung Öffnungsbereich der Tragmittelöffnungsvorrichtung anhebbar und wieder absenkbar.

Die Lade- und Transporthilfsmittel mit den in diese eingebrachten, geöffneten Tragmitteln werden im Anschluss an die Aufnahme der Tragmittel der zweiten Fördervorrichtung zur Weiterförderung übergeben.

Hierzu wird das Auflageorgan zusammen mit dem darauf angeordneten Lade- und Transporthilfsmittel und dem darin gehaltenen, mindestens einem, geöffneten Tragmittel insbesondere wieder abgesenkt.

Die zweite Fördervorrichtung dient insbesondere der Kommissionierung von Waren in die Tragmittel. Hierzu fördert die zweite Fördervorrichtung die Lade- und Transporthilfsmittel mit den in diesen angeordneten, geöffneten bzw. offenen Tragmitteln insbesondere an einzelnen Kommissionierstationen vorbei.

Die geöffneten bzw. offenen Tragmittel werden in der zweiten Fördervorrichtung insbesondere stehend gefördert. Hierzu liegen die Tragmittel insbesondere über einen Tragmittelboden einer Auflage des Lade- und Transporthilfsmittels auf.

Gemäss einer alternativen Ausführungsform werden die offenen Tragmittel in der zweiten Fördervorrichtung gegenüber einer Vertikalen geneigt gefördert. Hierzu liegen die Tragmittel insbesondere über eine Tragmittelwand, wie Taschenvorder- oder rückwand, und gegebenenfalls auch über einen Tragmittelboden einer Auflage des Lade- und Transporthilfsmittels auf.

Gemäss einer weiteren alternativen Ausführungsform werden die offenen Tragmittel in der zweiten Fördervorrichtung liegend gefördert. Hierzu liegen die Tragmittel insbesondere über eine Tragmittelwand, wie Taschenvorder- oder rückwand, einer Auflage des Lade- und Transporthilfsmittels auf.

Die zweite Fördervorrichtung zur Weiterförderung der Lade- und Transporthilfsmittel mit den in diesen mitgeführten, geöffneten bzw. offenen Tragmitteln kann gemäss einer ersten Ausführungsform eine Förderauflage für die Lade- und Transporthilfsmittel ausbilden.

Entsprechend werden die Lade- und Transporthilfsmittel mit den geöffneten Tragmitteln der Förderauflage aufliegend weggefördert.

Die Förderauflage kann aktiv angetrieben werden. Die Förderauflage kann durch eine Rollenbahn, ein Förderband, ein oder mehrere Förderriemen, eine Mattenkette bzw. eine Modulbandkette oder durch Förderplatten ausgebildet werden.

Gemäss einer zweiten Ausführungsvariante ist die zweite Fördervorrichtung als Hängeförderer ausgebildet. Die Lade- und Transporthilfsmittel und mit diesen die darin angeordneten, offenen Tragmittel werden gemäss dieser Ausführungsform hängend gefördert.

Die Lade- und Transporthilfsmittel können hierzu insbesondere über Haltemittel bzw. über eine Aufhängung direkt oder indirekt mit einem Förderorgan verbunden sein.

Die Haltemittel können beispielsweise eine Auflage ausbilden, welcher das Lade- und Transporthilfsmittel in der hängenden Förderung aufliegt. In diesem Fall wird das Lade- und Transporthilfsmittel indirekt hängend gefördert.

Die Auflage kann geschlossen oder offen ausgebildet sein. So kann die Auflage z. B. ein Tragboden, Gitter oder Gestänge sein.

Die Haltemittel können Seitenführungen enthalten, welche eine seitliche Begrenzung für die Lade- und Transporthilfsmittel ausbilden. Die Seitenführungen können z. B. (Seiten-)Wände, Gitter oder Gestänge sein.

Das Haltemittel kann insbesondere selbst einen Aufnahmebehälter, wie Transportgitter bzw. -korb ausbilden.

Die Auflage bzw. der Aufnahmebehälter kann über eine Aufhängung, wie Gestänge, mit dem Förderorgan verbunden sein.

Das Haltemittel kann gemäss einer alternativen Ausführungsform allerdings auch lediglich eine Aufhängung, wie Gestänge, umfassen, über welche das Lade- und Transporthilfsmittel hängend befestigt ist. Das heisst, der Boden der Lade- und Transporthilfsmittel ist gegen unten nicht gestützt. In diesem Fall werden die Lade- und Transporthilfsmittel direkt hängend gefördert.

Die Tragmittel werden indirekt hängend gefördert. Das heisst, die Tragmittel sind während der Förderung, wie bereits erwähnt, im Lade- und Transporthilfsmittel angeordnet, während das Lade- und Transporthilfsmittel direkt oder indirekt hängend gefördert wird.

Das Förderorgan wird beispielsweise entlang einer Führungsschiene geführt. Das Förderorgan kann einen Förderwagen mit Laufrollen umfassen.

Die Führungsschiene führt insbesondere entlang einer Kommissionierungsstrecke.

Entsprechend sind das Lade- und Transporthilfsmittel und insbesondere auch die in diesem angeordneten Tragmittel unterhalb des Förderorgans bzw. der Führungsschiene angeordnet.

Folglich werden die Lade- und Transporthilfsmittel mit den geöffneten bzw. offenen Tragmitteln hängend gefördert.

Die Kommissionierung in die geöffneten bzw. offenen Tragmittel erfolgt hier in hängender Position.

Das Lade- und Transporthilfsmittel zeichnet sich durch einen Aufnahmeraum zur Aufnahme mindestens eines Tragmittels aus. Der Aufnahmeraum braucht allerdings nicht geschlossen zu sein.

Das Lade- und Transporthilfsmittel weist hierzu eine Auflage, wie Boden, auf.

Das Lade- und Transporthilfsmittel weist ferner insbesondere Seitenführungen, wie Seitenwände auf.

Der Aufnahmeraum wird insbesondere durch die Auflage sowie durch die Seitenführungen begrenzt.

Das Lade- und Transporthilfsmittel stützt das mindestens eine Tragmittel insbesondere zur Auflage bzw. zum Boden hin ab.

Die geöffneten bzw. offenen Tragmittel sind im Lade- und Transporthilfsmittel gemäss dieser Ausführungsform insbesondere stehend angeordnet. Hierzu liegen die Tragmittel insbesondere über einen Tragmittelboden der Auflage des Lade- und Transporthilfsmittels auf.

Das Lade- und Transporthilfsmittel stützt das mindestens eine Tragmittel über die Seitenführungen insbesondere auch seitlich.

Hierzu steht das Tragmittel mit seinem Tragmittelboden insbesondere im Lade- und Transporthilfsmittel. Wie weiter unten noch erläutert, kann das Tragmittel allerdings auch geneigt oder liegend im Lade- und Transporthilfsmittel angeordnet sein.

Die Höhe der Seitenführungen bzw. Seitenwände des Lade- und Transporthilfsmittels kann der Höhe der Seitenwände des Tragmittels entsprechen.

Die Höhe der Seitenführungen bzw. Seitenwände des Lade- und Transporthilfsmittels kann auch höher sein als die Höhe der Seitenwände des Tragmittels.

Die Höhe der Seitenführungen bzw. Seitenwände des Lade- und Transporthilfsmittels kann niedriger sein als die Höhe der Seitenwände des Tragmittels, so dass die Tragmittel über die Seitenführungen bzw. Seitenwände des Lade- und Transporthilfsmittel ragen.

Das Lade- und Transporthilfsmittel ist insbesondere ein Behälter bzw. Transportbehälter. Im Rahmen der Erfindung soll der Begriff "Behälter" insbesondere auch eine "Kiste", eine "Box", eine "Schachtel", ein "Gefäss", eine "Wanne", eine "Schale", ein "Gitter" oder ein "Korb" umfassen.

Das Lade- und Transporthilfsmittel kann aus Karton, Kunststoff, Metall oder Holz bestehen oder dieses enthalten.

Die Lade- und Transporthilfsmittel sind insbesondere stapelbar.

Der Boden bzw. die Seitenwände des Lade- und Transporthilfsmittels können geschlossen sein oder Ausnehmungen aufweisen. Im letzteren Fall kann das Lade- und Transporthilfsmittel korb- bzw. gitterähnlich aufgebaut sein.

Im Speziellen hat das Lade- und Transporthilfsmittel im Wesentlichen die Form eines Quaders. Es kann aber auch eine andere Form aufweisen.

Das Lade- und Transporthilfsmittel kann einen elektronisch bzw. optoelektronisch auslesbaren Informationsträger, wie ein RFID-Etikett, ein Strichcode oder ein QR-Code umfassen, welcher Identifikationsinformationen zum Lade- und Transporthilfsmittel enthält. Dadurch lässt sich der Weg des Lade- und Transporthilfsmittel und somit auch der mit diesem mitgeführten Waren entlang der Logistikkette verfolgen.

Das Lade- und Transporthilfsmittel kann zur Aufnahme von exakt eines geöffneten Tragmittels oder von mehreren geöffneten Tragmitteln, wie z. B. zwei oder drei Tragmitteln ausgelegt sein.

Mehrere geöffnete Tragmittel sind im Lade- und Transporthilfsmittel insbesondere nebeneinander angeordnet.

Die Abmessung des Aufnahmeraums des Lade- und Transporthilfsmittel ist insbesondere passgenau auf die Aussenabmessung des Tragmittels bzw. der Tragmittel ausgelegt. Dadurch wird das Tragmittel bzw. werden die Tragmittel im Lade- und Transporthilfsmittel rutschsicher gehalten.

Ist das Lade- und Transporthilfsmittel zur Aufnahme von mehreren Tragmitteln, wie z. B. drei Tragmitteln ausgelegt, so kann vorgesehen sein, dass pro Öffnungsvorgang eine entsprechende Anzahl von Tragmitteln in entsprechend definierten Öffnungspositionen, insbesondere nebeneinander, in der Tragmittelöffnungsvorrichtung positioniert werden. Die Tragmittel werden hierbei gruppenweise und insbesondere gleichzeitig geöffnet.

Ferner werden die Tragmittel entsprechend gruppenweise, insbesondere miteinander, in das Tragmittel eingebracht.

Auf diese Weise können die zu öffnenden oder geöffneten Tragmittel positionsgetreu in das Lade- und Transporthilfsmittel eingebracht werden.

Die Lade- und Transporthilfsmittel dienen insbesondere den folgenden Zwecken:
- sie dienen als Förderorgan bei der Kommissionierung der Waren;
- sie geben den Tragmitteln seitlichen Halt, wodurch ein seitliches Wegknicken der Tragmittel, insbesondere beim Befüllen der Tragmittel mit Waren, oder ein seitliches Durchbrechen von Waren durch aufreissende Tragmittelwände verhindert werden kann;
- sie stützen den Tragmittelboden insbesondere flächig gegen unten ab, so dass keine Waren durch einen aufreissenden Boden durchbrechen können, insbesondere wenn diese mit Schwung in die Tragmittel eingeworfen werden;
- sie schützen mindestens einen unteren Tragmittelbereich vor Beschädigung durch äussere Einwirkung;
- sie entlasten die Tragmittel im allgemeinen, so dass diese wenigstens während der Kommissionierung sowie der Auslieferung weniger belastet werden;
- sie dienen als Transportmittel bei der Auslieferung der Waren im Anschluss an die Kommissionierung.

Die Erfindung betrifft auch eine Einrichtung zum automatisierten Öffnen von Tragmitteln und Bereitstellen der Tragmittel in Lade- und Transporthilfsmitteln, insbesondere zur Ausführung des oben beschriebenen Verfahrens.

Die Einrichtung enthält:
- eine Tragmittelzuführvorrichtung zum Zuführen von flach geschlossenen Tragmitteln von einem Stapel zu Haltemitteln einer ersten Fördervorrichtung;
- eine erste Fördervorrichtung zum, insbesondere hängenden Fördern der von Haltemitteln gehaltenen, flach geschlossenen Tragmitteln von der Tragmittelzufuhrvorrichtung zu einer Tragmittelöffnungsvorrichtung;
- eine Tragmittelöffnungsvorrichtung zum Öffnen und Auseinanderfalten der flach geschlossenen Tragmittel;
- eine Zusammenführvorrichtung zum Einbringen der Tragmittel in die Lade- und Transporthilfsmittel;
- eine zweite Fördervorrichtung zum Wegtransportieren der Lade- und Transporthilfsmittel mit den in diesen angeordneten, geöffneten Tragmitteln.

Ein weiterer Aspekt der vorliegenden Erfindung betrifft eine Einrichtung zum Kommissionieren von Waren in Tragmitteln, enthaltend eine Fördervorrichtung mit einer Mehrzahl von Lade- und Transporthilfsmitteln zur Aufnahme von Tragmitteln zwecks Förderung der Tragmittel entlang einer Kommissionierungsstrecke, sowie enthaltend eine Mehrzahl von entlang der Kommissionierungsstrecke angeordneten Abgabestellen zur Abgabe von Waren in die Tragmittel.

Dieser Erfindungsaspekt zeichnet sich dadurch aus, dass die Fördervorrichtung ein Hängeförderer ist, mittels welchem die in den Lade- und Transporthilfsmitteln angeordneten Tragmittel hängend entlang der Kommissionierungsstrecke gefördert werden können.

Die Fördervorrichtung entspricht insbesondere der weiter oben beschriebenen zweiten Fördervorrichtung gemäss der zweiten Ausführungsvariante.

Die Lade- und Transporthilfsmittel entsprechen insbesondere den weiter oben beschriebenen Lade- und Transporthilfsmitteln, wie z. B. Transportbehältern.

Die Anordnung der offenen Tragmittel in den Lade- und Transporthilfsmittel entspricht insbesondere der im Zusammenhang mit der Öffnungseinrichtung beschriebenen Anordnung der geöffneten Tragmittel in den Lade- und Transporthilfsmitteln. Dies betrifft auch die passgenau Aufnahme der Tragmittel in den Lade- und Transporthilfsmitteln gemäss einer Weiterbildung der Erfindung.

Entsprechend kann ein Lade- und Transporthilfsmittel, wie oben beschrieben, dazu ausgelegt sein, lediglich ein einzelnes oder mehrere offene Tragmittel, insbesondere drei offene Tragmittel aufzunehmen.

Die Tragmittel entsprechen den weiter oben beschriebenen Tragmitteln und können z. B. Tragetaschen sein.

Ferner betrifft dieser Erfindungsaspekt auch ein Verfahren zum Kommissionieren von Waren in Tragmitteln mittels der besagte Einrichtung, wobei sich das Verfahren dadurch auszeichnet, dass die Tragmittel über die Lade- und Transporthilfsmittel hängend entlang der Kommissionierungsstrecke an den Abgabestellen vorbei gefördert werden.

Die Tragmittel werden dabei in offenem Zustand in den Lade- und Transporthilfsmitteln entlang der Kommissionierungsstrecke gefördert.

Bei einer stehenden Förderung der Tragmittel ist die Tragmittelöffnung nach oben gerichtet. Die Abgabestellen entlang der Kommissionierungsstrecke sind hier derart ausgelegt und angeordnet, dass die Waren von oben durch die Tragmittelöffnung in das Tragmittel abgegeben werden. Die Waren können hierzu ungeführt in das Tragmittel fallen.

Bei einer geneigten Förderung ist die Tragmittelöffnung schräg nach oben gerichtet. Die Abgabestellen entlang der Kommissionierungsstrecke sind hier derart ausgelegt und angeordnet, dass die Waren von schräg oben durch die Tragmittelöffnung in das Tragmittel abgegeben werden. Die Waren können hierzu entlang der aufliegenden Taschenwand in das Tragmittel gleiten.

In beiden Fällen erfolgt die Abgabe der Waren insbesondere mittels Schwerkraftunterstützung.

Bei einer liegenden Förderung ist die Tragmittelöffnung zur Seite gerichtet. Die Abgabestellen entlang der Kommissionierungsstrecke sind hier derart ausgelegt und angeordnet, dass die Waren seitlich durch die Tragmittelöffnung in das Tragmittel abgegeben werden. Die Waren können hierzu seitlich durch die Tragmittelöffnung in das Tragmittel geschoben werden.

Die Lade- und Transporthilfsmittel können nach Abschluss der Kommissionierung mit den darin enthaltenen, befüllten Tragmitteln aus den Haltemitteln entnommen bzw. von diesen gelöst und einer weiteren Einrichtung zur Vornahme nachgeordneter Arbeitsschritte übergeben werden.

Die weitere Einrichtung kann wiederum eine Fördervorrichtung umfassen. Die Fördervorrichtung kann eine endlos umlaufende Förderfläche enthalten, welcher das Lade- und Transporthilfsmittel mit den darin enthaltenen, befüllten Tragmitteln aufliegt. Die bewegte Förderfläche kann ein Förderband, Modulbandkette oder Plattenkette sein.

Die vorliegende Erfindung findet insbesondere Einsatz in Logistikzentren von Online-Supermärkten.

Die vorliegende Erfindung erlaubt das vollautomatisierte Bereitstellen und Öffnen von Tragmitteln sowie das vollautomatisierte Einbringen der Tragmittel in die Lade- und Transporthilfsmittel. Dank der Erfindung werden die Wirtschaftlichkeit von Kommissionieranlagen erhöht und die Personalkosten gesenkt.

Nachfolgend wird der Erfindungsgegenstand anhand von Ausführungsbeispielen, welche in den beiliegenden Figuren dargestellt sind näher erläutert. Es zeigen jeweils schematisch:
- Figur 1:: eine Seitenansicht einer Taschenzuführvorrichtung;
- Figur 2:: eine Seitenansicht einer Taschenöffnungsvorrichtung;
- Figur 3:: eine perspektivische Ansicht des Öffnungsmechanismus der Taschenöffnungsvorrichtung;
- Figur 4a-4b:: Seitenansichten eines Wirkmittel-Mechanismus;
- Figur 5a-5b:: Seitenansichten eines weiteren Wirkmittel-Mechanismus;
- Figur 6:: eine Seitenansicht eines weiteren Taschenöffnungsmechanismus;
- Figur 7:: eine Seitenansicht eines als Haken ausgebildeten Haltemittels;
- Figur 8:: eine Seitenansicht einer Zusammenführvorrichtung;
- Figur 9a-9d:: verschiedene Ansichten einer Tragetasche;
- Figur 10:: eine perspektivische Ansicht einer weiteren Tragetasche;
- Figur 11a-11b:: verschiedene Ansichten einer weiteren Tragetasche;
- Figur 12:: eine perspektivische Ansicht einer weiteren Tragetasche;
- Figur 13:: eine Ansicht einer weiteren Ausführungsform einer zweiten Fördervorrichtung;
- Figur 14:: eine Ansicht einer Einrichtung zur Kommissionierung von Waren gemäss einem weiteren Erfindungsaspekt.

Grundsätzlich sind in den Figuren gleiche Teile mit gleichen Bezugszeichen versehen.

Für das Verständnis der Erfindung sind gewisse Merkmale in den Figuren nicht dargestellt. Die nachfolgend beschriebenen Ausführungsbeispiele stehen lediglich beispielhaft für den Erfindungsgegenstand und haben keine beschränkende Wirkung.

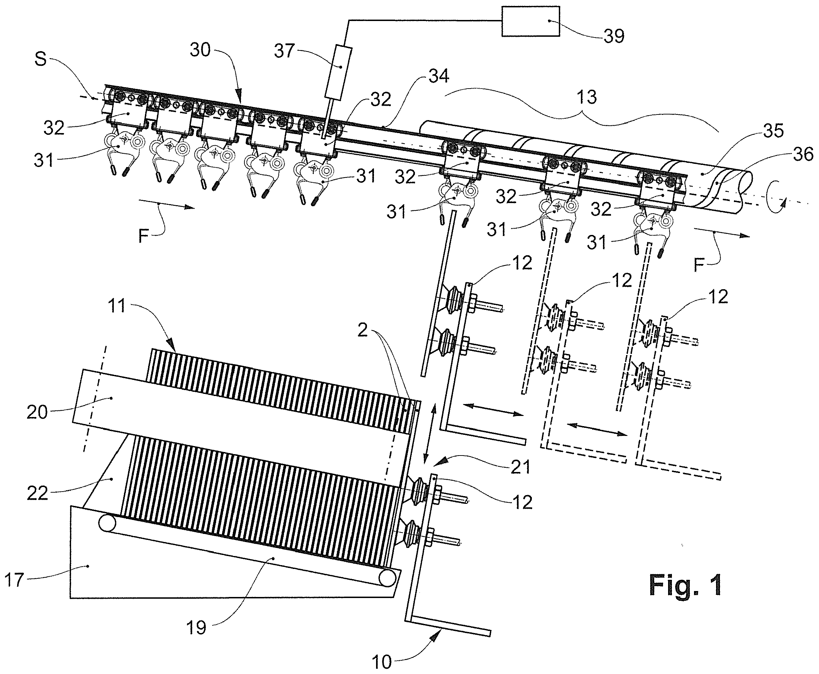

Die Figur 1 zeigt eine Seitenansicht einer Taschenzuführvorrichtung 10 und einer ersten Fördervorrichtung 30 sowie des gemeinsam ausgebildeten Transferbereichs 13.

Die Taschenzuführvorrichtung 10 enthält eine Stapelführung 17, in welcher ein Stapel 11 von flach zusammengefalteten Tragetaschen 2 liegend angeordnet ist. Der Stapel 11 liegt in der Stapelführung 17 einer Stapelauflage 19 auf, welche als Förderband ausgebildet ist. Das Förderband erlaubt die aktive Nachführung des Stapels 11 zu einer Taschenentnahmestelle 21 hin.

Der Stapel 11 bzw. die Stapelauflage 19 ist zur Taschenentnahmestelle 21 hin leicht schräg nach unten geneigt. Die Neigung unterstützt die aktive Nachführung des Stapels 11 zur Taschenentnahmestelle 21 hin.

Der Stapel 11 wird an seiner hinteren Flächenseite durch ein Stützorgan 22 gestützt. Ferner wird der Stapel 11 auch durch seitliche Stützorgane 20 seitlich gestützt. Die seitlichen Stützorgane 20 sind in diesem Ausführungsbeispiel jeweils als Förderband ausgebildet. Diese unterstützen die aktive Nachführung des Stapel zur Taschenentnahmestelle hin ebenfalls.

Die vordere Flächenseite des Stapels 11 ist an der Taschenentnahmestelle 21 ebenfalls gestützt, jedoch derart, dass diese die Entnahme einzelner Tragetaschen 2 vom Stapel 11 erlaubt.

Zur Entnahme einzelner Tragetaschen 2 vom Stapel 11 umfasst die Taschenzuführvorrichtung 10 im Weiteren einen Sauggreifer 12 mit mehreren Saugköpfen. Der Sauggreifer 12 kann über einen Bewegungsmechanismus (nicht gezeigt) zwischen dem Stapel 11 und Greifern 31 der ersten Fördervorrichtung 30 bewegt werden (siehe Bewegungspfeile).

Die erste Fördereinrichtung 30 ist ein Hängeförderer und umfasst eine Vielzahl von Fördereinheiten mit jeweils einem Förderwagen 32 sowie einem am Förderwagen 32 angeordneten Greifer 31.

Die Förderwagen 32 weisen Laufrollen auf (nicht gezeigt), mittels welchen der Förderwagen 32 entlang einer Führungsschiene 34 abrollt. Die Führungsschiene 34 bildet eine geschlossene Umlaufbahn für die Fördereinheiten aus.

Im Transferbereich 13 ist eine um eine Drehachse drehbar gelagerte Förderschnecke 35 angeordnet, mittels welcher leere Fördereinheiten zwecks Übernahme von flach zusammengefalteten Tragetaschen 2 gesteuert in den Transferbereich 13 in eine Transferposition gefördert werden.

Entlang des Aussenumfanges der Förderschnecke 35 ist hierzu eine wendel- bzw. schraubenlinienförmig ausgebildete Führungsnut 36 angeordnet, welche der Aufnahme und Mitnahme eines am Förderwagen 32 angeordneten Mitnahmenockens (nicht gezeigt) dient.

Zur Förderung der Fördereinheit in den Transferbereich 13 greift der Mitnahmenocken in die Führungsnut 36 ein und wird zusammen mit der Fördereinheit durch die sich mit der Förderschnecke 35 drehenden Führungsnut 36 entlang der Drehachse der Förderschnecke 35 mitgenommen und in den Transferbereich 13 gefördert.

In Förderrichtung F betrachtet vor der Förderschnecke 35 ist eine Freigabestation 37 angeordnet, welche mit einer Steuerung 39 zusammenwirkt.

Mittels der Freigabestation 37 werden einzelne Fördereinheiten gesteuert, insbesondere getaktet in den Transferbereich 13 freigegeben bzw. entlassen.

Die Freigabestation 37 enthält ein durch die Steuerung 39 schaltbares Rückhalteelement, mittels welchem die Fördereinheiten in Förderrichtung F betrachtet vor dem Transferbereich 13 zurückgehalten werden. Durch Schalten des Rückhalteelementes zwischen einer Rückhalte- und Freigabeposition werden einzelne Fördereinheiten in den Transferbereich 13 entlassen.

In Förderrichtung F betrachtet vor der Freigabestation 37 wird ferner eine Staustrecke ausgebildet, in welcher Förderwagen 32 mit leeren Greifern 31 gestaut werden. Die Staustrecke verläuft entlang eines Gefälles.

Zur Übergabe von zusammengefalteten Tragetaschen 2 an leere Greifer 31 der ersten Fördervorrichtung 30 wird jeweils eine Fördereinheit mittels der Freigabestation 37 in den Transferbereich 13 entlassen. Ferner wird der Sauggreifer 12 der Taschenzuführvorrichtung 10 zur vorderen Flächenseite des Stapels 11 geführt. Dieser erfasst mit seinen Saugköpfen die vorderste Tragetasche 2 an ihrer freien Flächenseite.

Der Sauggreifer 12 zieht die erfasst Tragetasche 2 vom Stapel 11 ab und transportiert diese zum offenen Greifer 31 der Fördereinheit im Transferbereich 13 (siehe Bewegungspfeile). Der Sauggreifer 12 führt die flach zusammengefaltete Tragetasche 2 mit einem oberen Taschenabschnitt in das offene Greifermaul des Greifers 31 ein. Der Greifer 31 wird geschlossen und ergreift die Tragetasche 2 in einer hängenden Position.

Sobald der Greifer 31 die Tragetasche 2 ergriffen hat, löst sich der Sauggreifer 12 wieder von der Tragetasche 2 und bewegt sich zurück zum Stapel 11 zwecks Erfassen und Ablösen einer nächsten Tragetasche 2 vom Stapel 11 (siehe Bewegungspfeile). Ein neuer Transferzyklus beginnt.

Die Fördereinheiten können einzeln oder in Gruppen in den Transferbereich 13 entlassen werden. Entsprechend können im Transferbereich 13 einzelne Greifer 31 oder eine Gruppe von Greifern 31 mit Tragetaschen 2 beschickt werden.

Die Fördereinheiten werden im Anschluss an die Übernahme der Tragetaschen 2 in hängender Position durch die Förderschnecke 35 in Förderrichtung F aus dem Transferbereich 13 heraus bewegt. In der Folge werden die mit zusammengefalteten Tragetaschen 2 bestückten Fördereinheiten hängend zu einer Taschenöffnungsvorrichtung 51 gefördert.

Falls im Transferbereich 13 jeweils eine Gruppe von Fördereinheiten mit Tragetaschen 2 beschickt werden, so werden die Fördereinheiten insbesondere auch gruppenweise der Taschenöffnungsvorrichtung 51 zugefördert. Die Anzahl der Fördereinheiten einer Gruppe von Fördereinheiten entspricht hierbei insbesondere der Anzahl von Tragetaschen 2, welche im Öffnungsbereich 66 einem einzelnen Lade- und Transportbehälter 3 übergeben werden sollen.

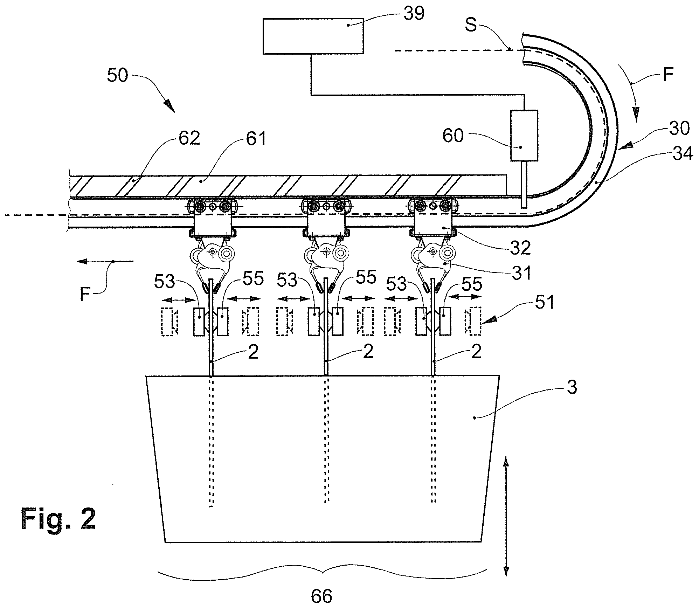

Die bereits genannte Taschenöffnungsvorrichtung 51 gemäss **Figur 2** bildet einen Öffnungsbereich 66 aus, in welchem die Tragetaschen 2 geöffnet und in einen Lade- und Transportbehälter 3 eingebracht werden.

Die Taschenöffnungsvorrichtung 51 enthält eine um eine Drehachse drehbare Förderschnecke 61, mittels welcher Fördereinheiten mit flach zusammengefalteten Tragetaschen 2 gesteuert in eine Öffnungsposition im Öffnungsbereich 66 gefördert werden.

Entlang des Aussenumfanges der Förderschnecke 61 ist hierzu eine wendel- bzw. schraubenlinienförmig ausgebildete Führungsnut 62 angeordnet, welche der Aufnahme und Mitnahme eines am Förderwagen 32 angeordneten Mitnahmenockens (nicht gezeigt) dient.

Zur Förderung einer Fördereinheit im Öffnungsbereich 66 greift der Mitnahmenocken in die Führungsnut 62 ein und wird zusammen mit der Fördereinheit durch die sich mit der Förderschnecke 61 drehenden Führungsnut 62 entlang der Drehachse der Förderschnecke 61 mitgenommen und in die Öffnungsposition gefördert.

In Förderrichtung F betrachtet vor der Förderschnecke 61 ist eine Freigabestation 60 angeordnet, welche mit der Steuerung 39 zusammenwirkt.

Mittels der Freigabestation 60 werden einzelne Fördereinheiten gesteuert, insbesondere getaktet in den Öffnungsbereich 66 freigegeben bzw. entlassen.

Die Freigabestation 60 enthält ein durch die Steuerung 39 schaltbares Rückhalteelement, mittels welchem die Fördereinheiten in Förderrichtung F betrachtet vor dem Öffnungsbereich 66 zurückgehalten werden. Durch Schalten des Rückhalteelementes zwischen einer Rückhalte- und Freigabeposition werden einzelne Fördereinheiten in den Öffnungsbereich 66 freigegeben bzw. entlassen.

In Förderrichtung F betrachtet vor der Freigabestation 60 wird ferner eine Staustrecke ausgebildet, in welcher Fördereinheiten mit zusammengefalteten Tragetaschen 2 gestaut werden können.

Die flach zusammengefalteten Tragetaschen 2 werden in hängender Position in den Öffnungsbereich 66 gefördert und geöffnet.

Das Öffnen der Tragetaschen 2 im Öffnungsbereich 66 erfolgt in einem zweistufigen Öffnungsverfahren.

Hierzu enthält die Taschenöffnungsvorrichtung 50 einen Separier-Mechanismus 51. Dieser umfasst einen ersten 53 und diesem gegenüber liegend zweiten Sauggreifer 55 mit jeweils mindestens einem ersten bzw. mindestens einem zweiten Saugkopf 54, 56, welche gegeneinander gerichtet sind. Die beiden Sauggreifer 53, 55 bilden einen Aufnahmespalt für eine Tragetasche 2 aus.

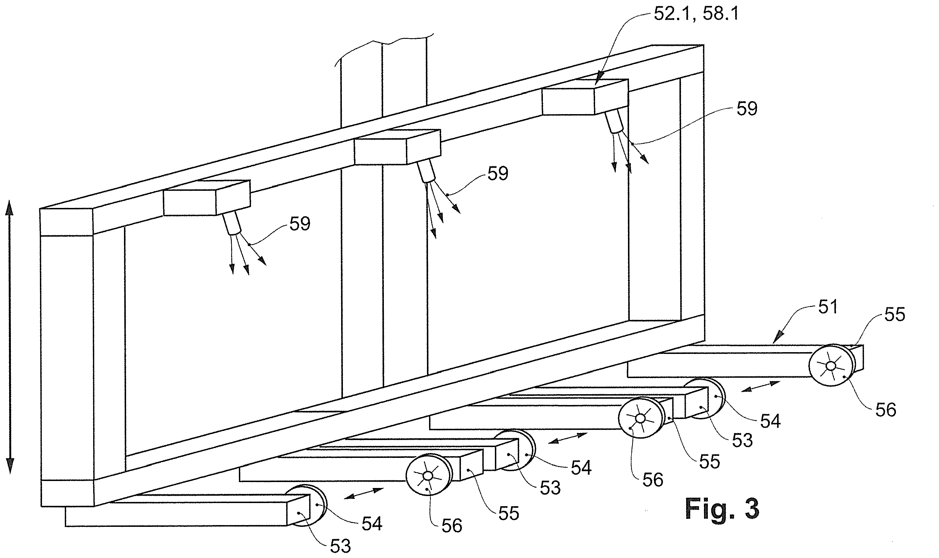

Die Sauggreifer 53, 55 sind an einem Traggestell angeordnet (siehe Figur 3).

Die Sauggreifer 53, 55 sind über einen Bewegungsmechanismus beweglich gelagert. Die Sauggreifer 53, 54 lassen sich mittels des Bewegungsmechanismus derart zu den Tragetaschen 2 in der Öffnungsposition hin bewegen, dass die Tragetaschen 2 jeweils zwischen den ersten und zweiten Sauggreifer 53, 55 zu liegen kommen.

Im vorliegendem Ausführungsbeispiels werden jeweils in Gruppen drei Tragetaschen 2 geöffnet und an einen Lade- und Transportbehälter 3 übergeben.

Entsprechend werden in der Taschenöffnungsvorrichtung jeweils drei Tagetaschen 2 in nebeneinander angeordnete Öffnungspositionen gefördert.

Der Separier-Mechanismus 51 umfasst nun drei Paarungen von oben erwähnten ersten und zweiten Sauggreifern 53, 55, welche derart zu den Tragetaschen 2 hin bewegt werden, dass die Tragetaschen 2 jeweils zwischen einem ersten und zweiten Sauggreifer 53, 55 einer Sauggreiferpaarung zu liegen kommen.

Zur Ausführung eines ersten Öffnungsschrittes werden die Sauggreifer 53, 55 unter Verringerung des Aufnahmespaltes zwischen den Sauggreifern 53, 55, zueinander hin bewegt. Grundsätzlich kann auch nur einer der Sauggreifer 53, 55 zum gegenüber liegenden Sauggreifer 53, 55 hin bewegt werden.

Die Sauggreifer 53, 55 nähern sich der Vorder- und Rückwand 4a, 4b der Tragetasche 2 an und erfassen diese mit ihren Saugköpfen 54, 56, welche auf die Taschenwände 4a, 4b einwirken und diese halten.

Nachdem die Sauggreifer 53, 55 die Tragetaschen 4a, 4b erfasst haben, werden diese aus den Greifern 31 der ersten Fördervorrichtung 30 entlassen. Die Tragetaschen 2 werden folglich nur noch durch die Sauggreifer 53, 55 gehalten.

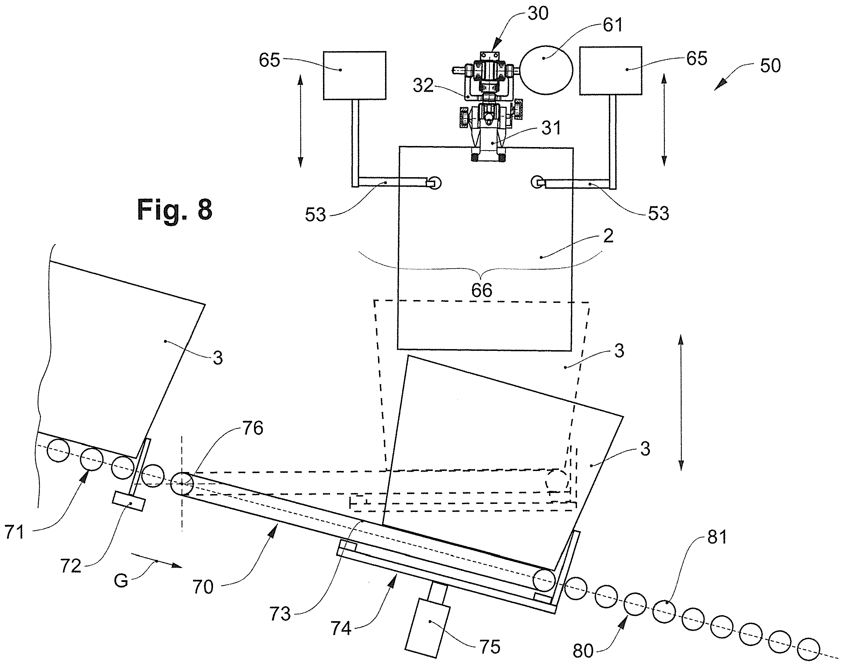

Die Sauggreifer 53, 55 sind zur Erzeugung eines Unterdruckes mit einem Unterdruck-Erzeuger 65 verbunden (siehe Figur 8).

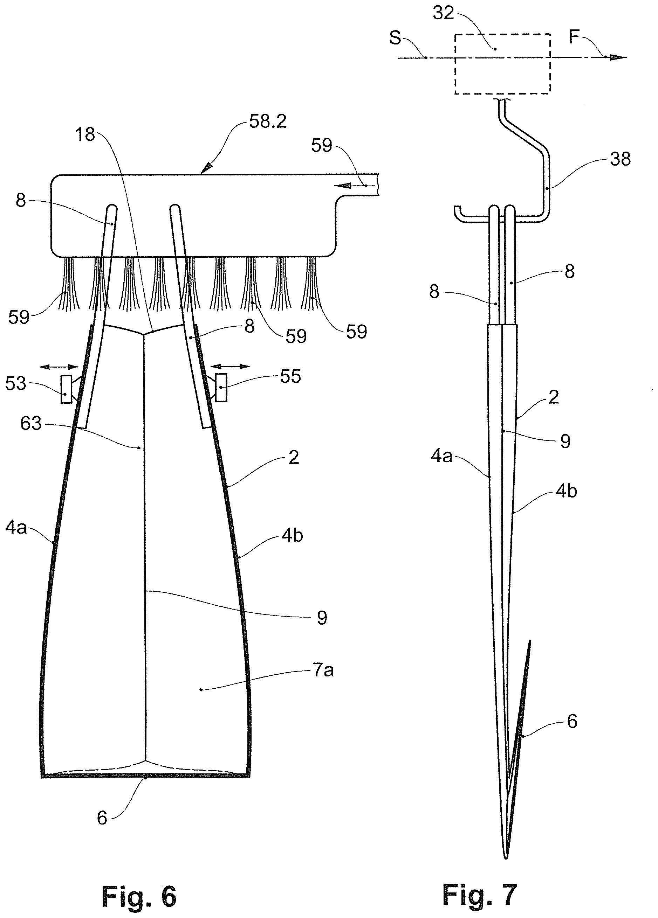

Die Sauggreifer 53, 55 werden nach Erfassen der Taschenwände 4a, 4b unter Vergrösserung des Aufnahmespaltes wieder voneinander wegbewegt, wodurch die beiden Taschenwände 4a, 4b unter Freigabe einer Taschenöffnung 18 bzw. wenigstens eines Öffnungsspaltes voneinander separiert werden (siehe auch Figur 6).

Durch die freigegebene Taschenöffnung 18 bzw. durch den Öffnungsspalt kann nun zwecks Ausführen des zweiten Öffnungsschrittes ein Wirkmittel 59 in den Tascheninnenraum 5 einwirken. Das Wirkmittel 59 ist Teil eines Wirkmittel-Mechanismus 52.1.

Der zweite Öffnungsschritt umfasst das vollständige Öffnen bzw. Auseinanderfalten der Tragetasche 2.

Gemäss dem Ausführungsbeispiel nach **Figur 3** umfasst der Wirkmittel-Mechanismus 52.1 ein Blasluftsystem 58.1, mittels welchem Blasluft 59 durch die Taschenöffnung 18 in den Tascheninnenraum 5 eingeblasen wird. Dies führt zu einem Aufblähen und somit zum vollständigen Öffnen der Tragetasche 2. Bei diesem Schritt wird auch der zur Vorder- bzw. Rückwand 4a, 4b hin umgeklappte Taschenboden 6 aufgeklappt (siehe auch Figur 6 und 7).

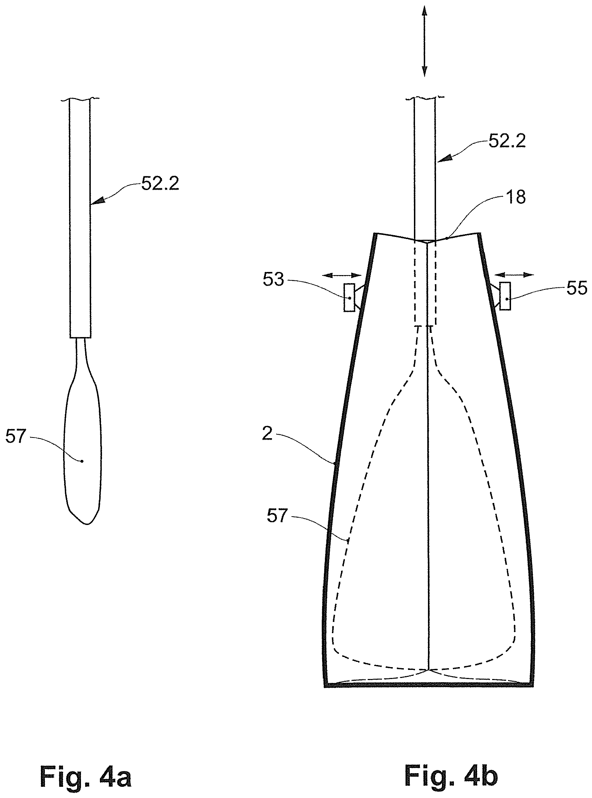

Die **Figuren 4a** und **4b** zeigen eine gegenüber dem Blasluftsystem 58.1 nach Figur 3 erste alternative Ausführungsform eines Wirkmittel-Mechanismus 52.2. Dieser umfasst einen an einem Gestänge gehaltenen, aufblasbaren Ballon 57. Der aufblasbare Ballon 57 wird im Anschluss an den ersten Öffnungsschritt zwecks Ausführung des zweiten Öffnungsschrittes mittels Gestänge durch die Taschenöffnung 18 in den Tascheninnenraum 5 eingeführt und aufgeblasen (siehe Bewegungspfeil). Durch das Aufblasen des Ballons 57 werden die Taschenwände 4a, 4b, 7a, 7b nach aussen gedrängt und die Tragetasche 2 wird vollständig geöffnet bzw. entfaltet. Der aufblasbare Ballon 57 wird nach dem vollständigen Öffnen der Tragetasche 2 wieder aus dem Tascheninnraum 5 heraus gezogen (siehe Bewegungspfeil).

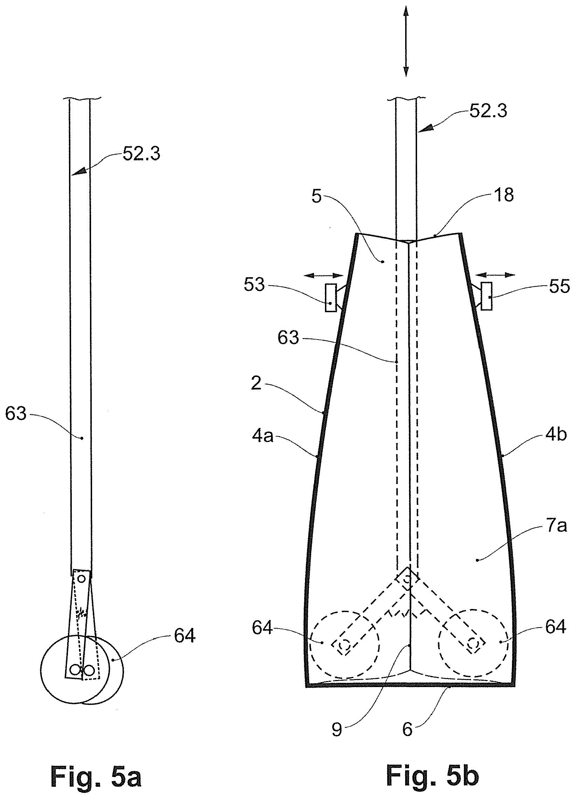

Die **Figuren 5a** und **5b** zeigen eine gegenüber dem Blasluftsystem 58.1 nach Figur 3 zweite alternative Ausführungsform eines Wirkmittel-Mechanismus 52.3. Dieser umfasst einen Öffnungsstössel 63, welcher an seinem freien Ende seitlich ausschwenkbare Rollen 64 aufweist. Der Öffnungsstössel 63 wird im Anschluss an den ersten Öffnungsschritt zwecks Ausführung des zweiten Öffnungsschrittes mit eingeklappten Rollen 64 durch die Taschenöffnung 18 in den Tascheninnenraum 5 eingeführt (siehe Bewegungspfeile).

Der Öffnungsstössel 63 wird nun mit den Rollen 64 bis zum Taschenboden 6 hin geführt. Sobald der Öffnungsstössel 63 seine Öffnungsposition im Tascheninnenraum 5 erreicht hat, werden die Rollen 64 seitlich ausgeschwenkt, wodurch die Taschenvorder- und Taschenrückwand 4a, 4b nach aussen gedrückt und der Taschenboden 6 aufgeklappt und die Tragetasche 2 aufgefaltet wird. Damit das Aufklappen des Taschenbodens 6 überhaupt zuverlässig erfolgt, werden die Rollen 64 in der Nähe des Bodens 6 seitlich ausgeschwenkt.

Die **Figur 6** zeigt ein gegenüber dem Blasluftsystem 58.1 nach Figur 3 alternatives Blasluftsystem 58.2 mit einer Vielzahl von Blasluftöffnungen, über welche Blasluft nach unten durch die Taschenöffnung 18 in den Tascheninnenraum 5 eingeblasen werden kann. Durch die Vielzahl von Blasluftöffnungen ist eine präzise Ausrichtung bzw. Positionierung der Blasluftöffnungen oberhalb der Taschenöffnung 18, wie dies im Ausführungsbeispiel nach Figur 3 der Fall ist, nicht notwendig.

Im Anschluss an das Öffnen und die Übergabe der geöffneten Tragetaschen 2 an die Lade- und Transportbehälter 3 werden die Fördereinheiten durch die Förderschnecke 61 aus dem Öffnungsbereich 66 heraus bewegt und in Förderrichtung F entlang der geschlossenen Förderstrecke zurück in den Transferbereich 13 gefördert.

Die **Figur 7** zeigt eine gegenüber der Fördereinheit nach Figur 1 alternative Ausführungsform einer Fördereinheit für die erste Fördervorrichtung.

Die Fördereinheit umfasst einen schematisch dargestellten Förderwagen 32, wie er auch im Ausführungsbeispiel nach Figur 1 und 2 gezeigt ist. Im Unterschied zum genannten Ausführungsbeispiel ist das Haltemittel allerdings ein Haltehaken 38, an welchem die Tragetasche 2 über die Tragehenkel 8 eingehängt ist.

Die **Figur 8** zeigt die Handhabung der Lade- und Transportbehälter 3 im Zusammenhang mit dem Bereitstellen von geöffneten Tragetaschen 2 gemäss vorliegender Erfindung.

Dargestellt ist Zuförderer 71 zum Zufördern von leeren Lade- und Transportbehältern 3 zu einer Zusammenführvorrichtung 70. Der Zuförderer 71 bildet eine Förderfläche für die Lade- und Transportbehälter 3 in Form einer Rollenauflage aus.

Der Zuförderer 71 bildet eine Staustrecke zum Zurückhalten von leeren Lade- und Transportbehälter 3 vor der Zusammenführvorrichtung 70 aus. Die leeren Lade- und Transportbehälter 3 werden mittels einer Freigabestation 72 einzeln der Zusammenführvorrichtung 70 zugefördert.

Zum Einbringen von Tragetaschen 2 in die Lade- und Transportbehälter 3 werden einzelne, leere Lade- und Transportbehälter 3 in Förderrichtung G auf ein Auflageorgan 73 der Zusammenführvorrichtung 70 gefördert. Das Auflageorgan 73 ist im vorliegenden Ausführungsbeispiel als Förderband ausgebildet und erlaubt die aktive Förderung des Lade- und Transportbehälters 3 auf dem Auflageorgan 73.

Das Auflageorgan 73 ist an einen Hebemechanismus 74 gekoppelt, mittels welchem dieses zusammen mit dem Lade- und Transportbehälter 3 zwecks Aufnahme von Tragetaschen 2 zum Öffnungsbereich 66 der Taschenöffnungsvorrichtung 50 hochgehoben und wieder abgesenkt werden kann.

Der Hebemechanismus 74 ist als Schwenkanordnung ausgebildet, mittels welcher das Auflageorgan 73 um eine Schwenkachse 76 schwenkend zur Taschenöffnungsvorrichtung 50 hochgehoben werden kann. Zur Ausführen der Schwenkbewegung ist unterhalb des Auflageorgans 73 ein Huborgan 75 mit Hubzylinder angeordnet, welcher dazu ausgelegt ist, das Auflageorgan 73 von unten anzuheben und wieder abzusenken (siehe Doppelpfeil).

In der Ausgangsposition, in welcher vom Zuförderer 71 die leeren Lade- und Transportbehälter 3 auf das Auflageorgan 73 bewegt werden, und in welcher vom Auflageorgan 73 Lade- und Transportbehälter 3 mit Tragetaschen 2 an die zweite Fördervorrichtung 80 übergeben werden, weist die Auflagefläche des Auflageorgans 73 eine Neigung auf.

Die Auflageflächen des Zuförderers 71 und der zweiten Fördervorrichtung 80 sind ebenfalls geneigt und fluchten mit der Auflagefläche des Auflageorgans 73. Das Gefälle der geneigten Auflageflächen weist in Förderrichtung G, so dass die Lade- und Transportbehälter 3 auf der Rollenauflage des Zuförderers 71 bzw. der zweiten Fördervorrichtung 80 mit Schwerkraftunterstützung in Förderrichtung G gefördert werden können.

Zwecks Einbringen der noch flach zusammengefalteten Tragetaschen 2 in den Lade- und Transportbehälter 3 im Öffnungsbereich 66 der Taschenöffnungsvorrichtung 50, wird das Auflageorgan 73 mittels des Hebemechanismus 74 und mit diesem der Lade- und Transportbehälter 3 auf dem Auflageorgan 73 nach oben zum Öffnungsbereich 66 hin angehoben.

Die Tragetaschen 2 im Öffnungsbereich 66 werden auf diese Weise mit ihrem bisher frei hängenden bodenseitigen Taschenabschnitt im Lade- und Transportbehälter 3 positioniert.

Die Tragetaschen 2 werden anschliessend im Lade- und Transportbehälter 3 mittels des bereits weiter oben beschriebenen, zweistufigen Öffnungsverfahren vollständig geöffnet.

Nach dem Öffnen der Tragetaschen 2 werden diese von den Sauggreifern 53, 55 wieder freigegeben und das Auflageorgan 73 wird mittels des Hebemechanismus 74 wieder abgesenkt. Entsprechend werden die Lade- und Transportbehälter 3 zusammen mit den darin geöffneten Tragetaschen 2 aus dem Öffnungsbereich 66 wieder in die Ausgangsposition abgesenkt.

Die zweite Fördervorrichtung 80 ist ein Rollenförderer mit einer Rollenauflage 81 für die Lade- und Transportbehälter 3. Sobald das Auflageorgan 73 seine Ausgangsposition wieder eingenommen hat, werden die Lade- und Transportbehälter 3 mit den in diesen enthaltenen, geöffneten Tragetaschen 2 durch das Förderband des Auflageorgans 73 auf die Rollenauflage 81 der zweiten Fördervorrichtung 80 bewegt und anschliessend mit der zweiten Fördervorrichtung 80 weitergefördert, z. B. entlang einer Kommissionierungsstrecke.

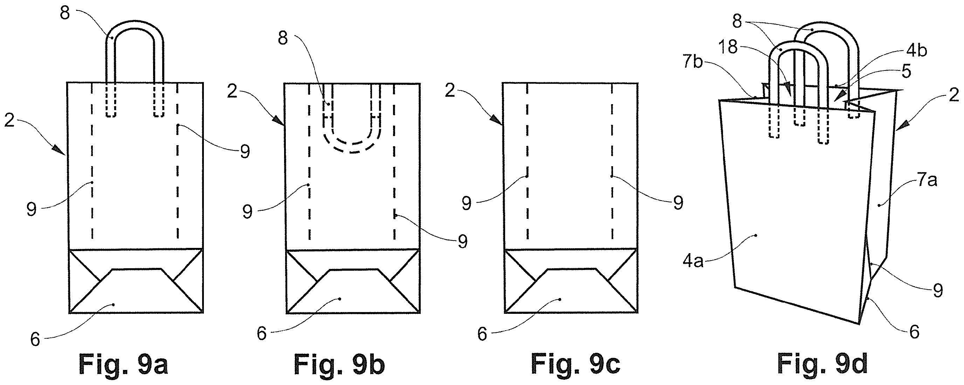

Die **Figuren 9a bis 9d** zeigen eine herkömmliche Tragetasche 2 wie sie zum Transport von Einkäufen üblich ist und in vorliegender Erfindung Einsatz finden kann.

Die Tragetasche 2 weist eine Taschenvorderwand 4a, eine Taschenrückwand 4b sowie zwei Taschenseitenwände 7a, 7b auf. Die Taschenseitenwände 7a, 7b bilden die kurzen Seiten der Tragetasche 2 aus. Die Tragetasche 2 weist ferner eine Taschenöffnung 18 auf, welche in den Tascheninnenraum 5 führt. Die Taschenöffnung 18 dient dem Befüllen der Tragetasche 2 mit Waren.

Die Tragetasche 2 enthält im Weiteren zwei Tragehenkel 8 zum Tragen der Tragetasche 2, wovon ein erster Tragehenkel 8 an der Taschenvorderwand 4a und ein zweiter Tragehenkel 8 an der Taschenrückwand 4b befestigt ist. Die Tragehenkel 8 lassen sich in den Tascheninnenraum 5 umklappen (siehe Figur 9b).

Im Weiteren umfasst die Tragetasche 2 einen Taschenboden 6, welcher im zusammengefalteten Zustand der Tragetasche 2 zur Taschenvorderwand 4a oder Taschenrückwand 4b umgeklappt ist (siehe Figur 4a bis 4c).

In den Taschenseitenwänden 7a, 7b sind längslaufende Falzlinien 9 angeordnet, entlang welcher die Tragetasche 2 zusammengefaltet werden kann.

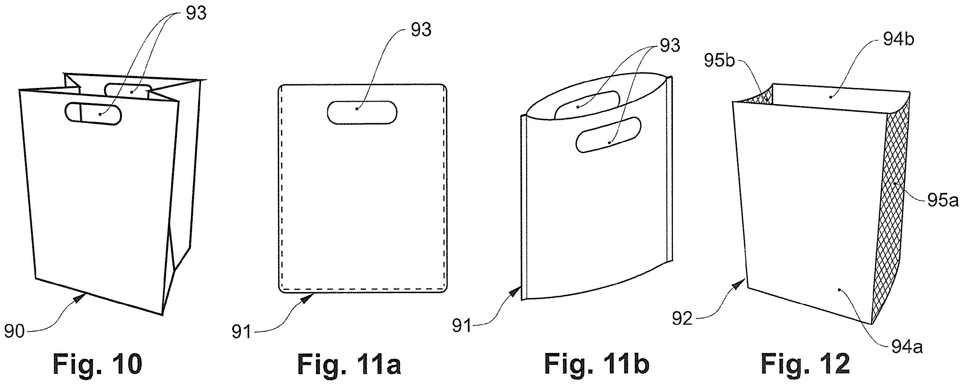

Die Figuren 10 bis 12 stellen weitere Ausführungsformen von Tragetaschen 90, 91, 92 dar. Die Tragetaschen 90, 91, 92 bilden jeweils ebenfalls eine nach oben weisende Taschenöffnung aus und sind flach zusammenfaltbar.

Die Tragetasche 90 gemäss **Figur 10** ist analog zur Tragetasche 2 nach Figur 9a bis 9d als Falttasche ausgebildet. Die Tragetasche 90 weist allerdings keine Tragehenkel auf sondern enthält Grifföffnungen 93, welche jeweils im oberen Taschenabschnitt in der Taschenvorderwand und der Taschenrückwand angeordnet sind.

Die Tragetasche 91 gemäss den **Figuren 11a** und **11b** weist analog zur Tragetasche 90 gemäss Figur 10 ebenfalls Grifföffnungen 93 zum Halten der Tragetasche 91 auf. Die Tragetasche 91 ist allerdings keine Falttasche mit Falzlinien in den Taschenseitenwänden. Die Tragetasche 91 weist vielmehr eine Taschenvorderwand und eine Taschenrückwand auf, welche über Verbindungnähte miteinander verbunden sind.

Die Tragetasche 92 gemäss der **Figur** 12 weist eine Taschenvorderwand 94a eine Taschenrückwand 94b sowie diese verbindende Taschenseitenwände 95a, 95b auf. Die Taschenseitenwände 95a, 95b sind jeweils als Gewebenetz ausgebildet.

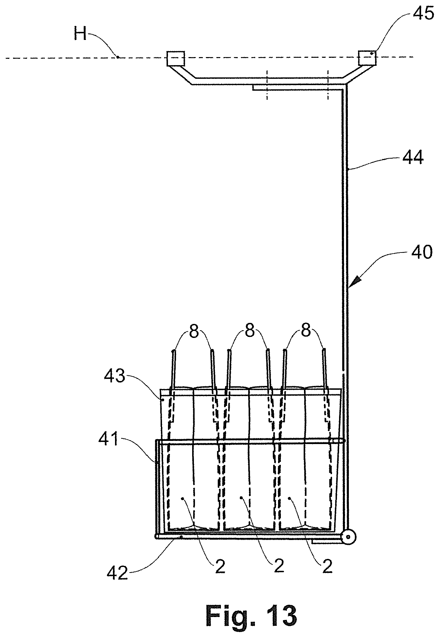

Die zweite Fördervorrichtung 40 ist gemäss dem Ausführungsbeispiel nach **Figur 13** als Hängeförderer 40 ausgebildet.

Der Hängeförderer 40 umfasst Haltemittel in Form von Transportgittern 41, welche jeweils über ein Gestänge 44 mit einem Förderorgan 45 verbunden sind. Die Transportgitter 41 bildet jeweils einen Tragboden 42 aus, welchem ein Transportbehälter 43 mit den darin enthaltenen, geöffneten Tragetaschen 2 in der hängenden Förderung aufliegt. Ferner bilden die Transportgitter 41 eine Stützgeländer zum seitlichen Stützen der Transportbehälter 43 aus.

Das in Figur 13 nicht näher dargestellte Förderorgan 45 kann ein Förderwagen sein, welcher über Laufrollen entlang einer ebenfalls nicht näher dargestellten Förderschiene abrollt. Die Förderschiene verläuft entlang einer Förderstrecke H, welche symbolisch auch die Förderschiene darstellt.

Wie in Figur 13 angedeutet umfasst der Förderwagen 45 insbesondere zwei entlang der Förderrichtung F bzw. in Schienenlängsrichtung hintereinander angeordnete und voneinander beabstandete Wagenkörper auf, welche über einen Verstrebungskörper, wie Verbindungsstrebe, miteinander verbunden sind. Die beiden Wagenkörper weisen jeweils mindestens eine Laufrolle auf (nicht gezeigt), über welche der Förderwagen 45 entlang der Förderschiene abrollt (nicht gezeigt).

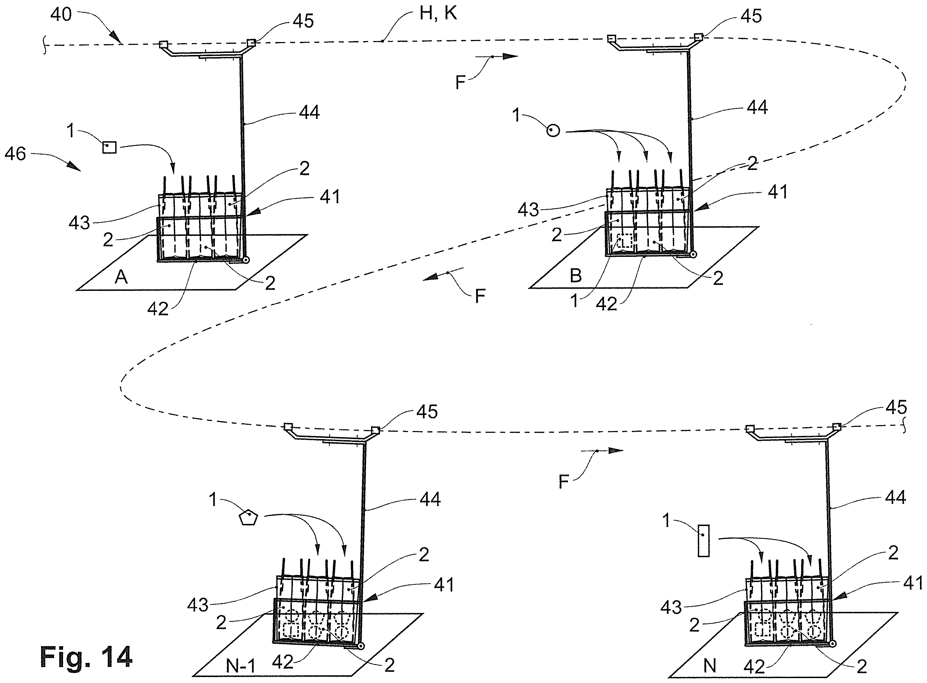

Die **Figur 14** zeigt eine Einrichtung 46 zum Kommissionieren von Waren 1 in Tragetaschen 2 mit einer Fördervorrichtung 40 gemäss Figur 13, sowie enthaltend eine Mehrzahl von entlang einer Kommissionierungsstrecke K angeordneten Abgabestellen A, B, N-1, N zur Abgabe von Waren 1 in die Tragetaschen 2. Die Kommissionierungsstrecke K entspricht der Förderstrecke H des Hängeförderers 40.

Die Fördervorrichtung 40 enthält eine Mehrzahl von Transportbehältern 43 zur Aufnahme von jeweils drei Tragetaschen 2 zwecks Förderung der Tragetaschen 2 entlang der Kommissionierungsstrecke K. Es ist allerdings auch eine andere Anzahl Tragetaschen 2 pro Transportbehälter 43 denkbar.

Die Fördervorrichtung 40 ist als Hängeförderer ausgebildet, mittels welchem die in den Transportbehältern 43 angeordneten Tragetaschen 2 indirekt hängend entlang der Kommissionierungsstrecke K an den Abgabestellen 47 vorbei gefördert werden.

An den Abgabestellen A, B, N-1, N, welche lediglich symbolisch dargestellt sind, werden die Waren 1 von oben durch die Taschenöffnung in die einzelnen Tragetaschen 2 abgegeben, wobei an einer Abgabestelle A, B, N-1, N nicht zwingend sämtliche Tragetaschen 2 eines Transportbehälters 43 mit Waren 1 beschickt werden müssen.

## Patentansprüche

1. Verfahren zum automatisierten Öffnen von Tragmitteln (2) und Bereitstellen der Tragmittel (2) in behälterartigen Lade- und Transporthilfsmitteln (3), **gekennzeichnet durch** folgende Schritte:
- Zuführen von flach geschlossenen Tragmitteln, insbesondere von einem Stapel (11), zu Haltemitteln (31) einer ersten Fördervorrichtung (30) mittels einer Tragmittelzufuhrvorrichtung (10);
- Fördern der von Haltemitteln (31) gehaltenen, flach geschlossenen Tragmittel (2) zu einer Tragmittelöffnungsvorrichtung (50);
- Öffnen der flach geschlossenen Tragmittel (2) mittels der Tragmittelöffnungsvorrichtung (50);
- Einbringen der Tragmittel (2) in die Lade- und Transporthilfsmittel (3) mittels einer Zusammenführvorrichtung (70);
- Wegfördern der Lade- und Transporthilfsmittel (3) mit den in diesen angeordneten, geöffneten Tragmitteln (2) mittels einer zweiten Fördervorrichtung (80).

2. Verfahren nach Anspruch 1, **dadurch gekennzeichnet, dass** die flach geschlossenen Tragmittel (2) flach zusammengefaltet sind.

3. Verfahren nach einem der Ansprüche 1 bis 2, **dadurch gekennzeichnet, dass** die Tragmittel (2) Tragetaschen sind.

4. Verfahren nach einem der Ansprüche 1 bis 3, **dadurch gekennzeichnet, dass** die flach geschlossenen Tragmittel (2) mittels eines Sauggreifers (12) vom Stapel (11) abgetrennt und an die Haltemittel (31) übergeben werden.

5. Verfahren nach einem der Ansprüche 1 bis 4, **dadurch gekennzeichnet, dass** die Haltemittel (31) zwecks Übernahme von flach geschlossenen Tragmitteln (2) über eine Bereitstelleinheit (35), insbesondere einen Schneckenförderer (35), gesteuert in einen Transferbereich (13) gefördert werden.

6. Verfahren nach einem der Ansprüche 1 bis 5, **dadurch gekennzeichnet, dass** die flach geschlossenen Tragmittel (2) mittels den Haltemitteln (31) hängend gefördert werden.

7. Verfahren nach einem der Ansprüche 1 bis 6, **dadurch gekennzeichnet, dass** die Haltemittel (31) mit den flach geschlossenen Tragmitteln (2) über einen Takter (60) getaktet in die Tragmittelöffnungsvorrichtung (50) gefördert werden.

8. Verfahren nach einem der Ansprüche 1 bis 7, **dadurch gekennzeichnet, dass** in einem ersten Öffnungsschritt zwei, einander gegenüber liegende Tragmittelwände (4a, 4b) separiert werden und in einem zweiten Öffnungsschritt das Tragmittel (2) mittels eines in den Tragmittelinnenraum (5) einwirkenden Wirkmittels (57, 59, 63) vollständig geöffnet wird.

9. Verfahren nach einem der Ansprüche 1 bis 8, **dadurch gekennzeichnet, dass** die flach geschlossenen Tragmittel (2) in hängender Position geöffnet werden.

10. Verfahren nach einem der Ansprüche 1 bis 9, **dadurch gekennzeichnet, dass** im ersten Öffnungsschritt zwei einander gegenüber liegende Tragmittelwände (4a, 4b) mittels Sauggreifer (53) separiert werden.

11. Verfahren nach einem der Ansprüche 1 bis 10, **dadurch gekennzeichnet, dass** die Tragmittel (2) mittels des Separier-Mechanismus (51), insbesondere mittels dessen Sauggreifer (53, 55), von den Haltemitteln (31) der ersten Fördervorrichtung (30) an die Lade- und Transporthilfsmittel (3) übergeben werden.

12. Verfahren nach einem der Ansprüche 1 bis 11, **dadurch gekennzeichnet, dass** die Lade- und Transporthilfsmittel (3) mit den in diese eingebrachten, geöffneten Tragmitteln (2) der zweiten Fördervorrichtung (80) zur Weiterförderung übergeben werden.

13. Einrichtung zum automatisierten Öffnen von Tragmitteln (2) und Bereitstellen der Tragmittel (2) in Lade- und Transporthilfsmitteln (3), insbesondere zur Ausführung des Verfahrens nach einem der Ansprüche 1 bis 12,
**gekennzeichnet, durch**:
- eine Tragmittelzuführvorrichtung (10) zum Zuführen von flach geschlossenen Tragmitteln (2) von einem Stapel (11) zu Haltemitteln (31) einer ersten Fördervorrichtung (30);
- eine erste Fördervorrichtung (30), insbesondere Hängefördervorrichtung, zum Fördern der von Haltemitteln (31) gehaltenen, flach geschlossenen Tragmitteln (2) zu einer Tragmittelöffnungsvorrichtung (50);
- eine Tragmittelöffnungsvorrichtung (50) zum Öffnen der flach geschlossenen Tragmittel (2);
- eine Zusammenführvorrichtung (70) zum Einbringen der Tragmittel (2) in die Lade- und Transporthilfsmittel (3);
- eine zweite Fördervorrichtung (80) zum Wegtransportieren der Lade- und Transporthilfsmittel (3) mit den in diesen angeordneten, geöffneten Tragmitteln (2).

14. Einrichtung nach Anspruch 13, **dadurch gekennzeichnet, dass** die Haltemittel (31) jeweils an einem Förderorgan (32) angeordnet sind, welches entlang einer Förderstrecke bewegbar ist.

15. Einrichtung nach einem der Ansprüche 13 bis 14, **dadurch gekennzeichnet, dass** die Tragmittelöffnungsvorrichtung (50) einen Separier-Mechanismus (51) zum Separieren von zwei, einander gegenüber liegenden Tragmittelwänden (4a, 4b) umfasst.

16. Einrichtung nach einem der Ansprüche 13 bis 15, **dadurch gekennzeichnet, dass** die Tragmittelöffnungsvorrichtung (50) einen Wirkmittel-Mechanismus (52) mit einem in den Tragmittelinnenraum (5) einwirkenden Wirkmittel (57, 59, 63) zum vollständigen Öffnen der Tragmittel (2) umfasst.

17. Einrichtung nach einem der Ansprüche 13 bis 16, **dadurch gekennzeichnet, dass** die zweite Fördervorrichtung ein Hängeförderer (40) ist.

18. Einrichtung (46) zum Kommissionieren von Waren (1) in Tragmitteln (2), enthaltend eine Fördervorrichtung (40) mit einer Mehrzahl von Lade- und Transporthilfsmitteln (43) zur Aufnahme von Tragmitteln (2) zwecks Förderung der Tragmittel (2) entlang einer Kommissionierungsstrecke (K), sowie enthaltend eine Mehrzahl von entlang der Kommissionierungsstrecke (K) angeordneten Abgabestellen (47) zur Abgabe von Waren (1) in die Tragmittel (2),
**dadurch gekennzeichnet, dass**
die Fördervorrichtung (40) ein Hängeförderer ist, mittels welchem die in den Lade- und Transporthilfsmitteln (43) angeordneten Tragmittel (2) hängend entlang der Kommissionierungsstrecke (K) gefördert werden können.

19. Einrichtung nach Anspruch 18, **dadurch gekennzeichnet, dass** die Lade- und Transporthilfsmittel (43) jeweils mehrere Tragmittel (2) aufnehmen.

20. Verfahren zum Kommissionieren von Waren (1) in Tragmitteln (2) mittels einer Einrichtung (46) nach einem der Ansprüche 18 bis 19, **dadurch gekennzeichnet, dass** die Tragmittel (2) über die Lade- und Transporthilfsmittel (43) hängend entlang der Kommissionierungsstrecke (K) an den Abgabestellen (47) vorbei gefördert werden.

## Claims

1. A method for the automated opening of carrier means (2) and for the provision of the carrier means (2) in container-like loading and transport aids (3),
**characterised by** the following steps:
- feeding flatly closed carrier means, in particular from a stack (11), to holding means of a first conveying appliance (30) by way of a carrier means feed appliance (10);
- conveying the flatly closed carrier means (2) which are held by the holding means (31), to a carrier means opening appliance (50);
- opening the flatly closed carrier means (2) by way of the carrier means opening appliance (50);
- bringing the carrier means (2) into the loading and transport aids (3) by way of a merging appliance (70);
- conveying away of the loading and transport aids (3) with the opened carrier means (2) which are arranged in these, by way of a second conveying appliance (80).

2. A method according to claim 1, **characterised in that** the flatly closed carrier means (2) are folded together in a flat manner.

3. A method according to one of the claims 1 to 2, **characterised in that** the carrier means (2) are carrier bags.

4. A method according to one of the claims 1 to 3, **characterised in that** the flatly closed carrier means (2) are separated from the stack (11) and transferred onto the holding means (31), by way of a suction gripper (12).

5. A method according to one of the claims 1 to 4, **characterised in that** the holding means (31) are conveyed into a transfer region (13) in a controlled manner via a supply unit (35), in particular via a screw conveyor (35), for the purpose of the take-over of the flatly closed carrier means (2).

6. A method according to one of the claims 1 to 5, **characterised in that** the flatly closed carrier means (2) are conveyed in a suspended manner by way of the holding means (31).

7. A method according to one of the claims 1 to 6, **characterised in that** the holding means (31) with the flatly closed carrier means (2) are conveyed into the carrier means opening appliance (50) in a cycled manner via a pacer (60).

8. A method according to one of the claims 1 to 7, **characterised in that** in a first opening step, two carrier means walls (4a, 4b) which lie opposite one another are separated and in a second opening step, the carrier means (2) is completely opened by way of an active means (57, 59, 63) which acts into the carrier means interior (5).

9. A method according to one of the claims 1 to 8, **characterised in that** the flatly closed carrier means (2) are opened in the suspended position.

10. A method according to one of the claims 1 to 9, **characterised in that** in the first opening step two carrier means walls (4a, 4b) which lie opposite one another are separated by way of suction grippers (53).

11. A method according to one of the claims 1 to 11, **characterised in that** the carrier means (2) are transferred from the holding means (31) of the first conveying appliance (30) onto the loading and transport aids (3) by way of the separating mechanism (51), in particular by way of its suction grippers (53, 55)

12. A method according to one of the claims 1 to 11, **characterised in that** the loading and transport aids (3) with the opened carrier means (2) which are brought into these are transferred to the second conveying appliance (80) for further conveying.

13. A facility for the automated opening of carrier means (2) and for the supply of the carrier means (2) in loading and transport aids (3), in particular for carrying out the method according to one of the claims 1 to 12,
**characterised by**
- a carrier means feed appliance (10) for feeding flatly closed carrier means (2) from a stack (11) to holding means (31) of a first conveying appliance (30);
- a first conveying appliance (30), in particular suspended conveying appliance, for conveying the flatly closed carrier means (2) which are held by holding means (31), to a carrier means opening appliance (50);
- a carrier means opening appliance (50) for opening the flatly closed carrier means (2);
- a merging appliance (70) for bringing the carrier means (2) into the loading and transport aids (3);
- a second conveying appliance (80) for transporting away the loading and transport aids (3) with the opened carrier means (2) which are arranged in these.

14. A facility according to claim 13, **characterised in that** the holding means (31) are each arranged on a conveying member (32) which is movable along a conveying stretch.

15. A facility according to one of the claims 13 to 14, **characterised in that** the carrier means opening appliance (50) comprises a separating mechanism (51) for separating two carrier means walls (4a, 4b) which lie opposite one another.

16. A facility according to one of the claims 13 to 15, **characterised in that** the carrier means opening appliance (50) comprises an active means mechanism (52) with an active means (57, 59 63) which acts into the carrier means interior (5) for the complete opening of the carrier means (2).

17. A facility according to one of the claims 13 to 16, **characterised in that** the second conveying appliance is a suspended conveyor (40).

18. Facility (46) for order picking of goods (1) into carrier means (2), containing a conveying appliance (40) with a plurality of loading and transport aids (43) for receiving of carrier means (2) for the purpose of conveying the carrier means (2) along an order picking stretch (K), further containing a plurality of delivery stations (47) arranged along the order picking stretch (K) for delivery of goods (1) into the carrier means (2),
**characterised in that**,
the conveying appliance (40) is a suspended conveyor (overhead conveyor), by which the carrier means (2) which are arranged in the loading and transport aids (43) can be conveyed in a hanging manner along the order picking stretch (K).

19. Facility according to claim 18, **characterized in that** the loading and transport aids (43) in each case receive several carrier means (2).

20. Method for order picking goods (1) into carrier means (2) by means of a facility (46) according to one of the claims 18 to 19, **characterised in that** the carrier means (2) are conveyed via the loading and transport aids (43) along the order picking stretch (K) past the delivery stations (47) in a hanging manner.

## Revendications

1. Procédé d'ouverture automatique de moyens de support (2) et placement des moyens de support (2) dans des moyens auxiliaires (3) de chargement et de transport de type récipient,
le procédé étant **caractérisé par** les étapes suivantes :
- amenée de moyens de support fermés plats extraits en particulier d'une pile (11) à des moyens de retenue (31) d'un premier ensemble de transport (30) au moyen d'un ensemble (10) d'amenée de moyens de support,
- transport des moyens de support (2) fermés plats maintenus par les moyens de retenue (31) vers un ensemble (50) d'ouverture de moyens de support,
- ouverture des moyens de support (2) fermés plats au moyen de l'ensemble (50) d'ouverture de moyens de support,
- amenée des moyens de support (2) dans les moyens auxiliaires (3) de chargement et de transport au moyen d'un ensemble (70) de rassemblement,
- éloignement au moyen d'un deuxième ensemble de transport (80) des moyens auxiliaires (3) de chargement et de transport dans lesquels sont disposés les moyens de support (2) ouverts.

2. Procédé selon la revendication 1, **caractérisé en ce que** les moyens de support (2) fermés plats sont repliés à plat.

3. Procédé selon l'une des revendications 1 et 2, **caractérisé en ce que** les moyens de support (2) sont des poches de support.

4. Procédé selon l'une des revendications 1 à 3, **caractérisé en ce que** les moyens de support (2) fermés plats sont enlevés de la pile (11) au moyen d'un dispositif (12) de saisie par aspiration et sont transférés aux moyens de retenue (31).

5. Procédé selon l'une des revendications 1 à 4, **caractérisé en ce que** les moyens de retenue (31) sont transportés de manière contrôlée dans une zone de transfert (13) en vue de transférer des moyens de support (2) fermés plats par l'intermédiaire d'une unité de préparation (35), en particulier un transporteur à vis (35).

6. Procédé selon l'une des revendications 1 à 5, **caractérisé en ce que** les moyens de support (2) fermés plats sont transportés au moyen des moyens de retenue (31) en étant suspendus.

7. Procédé selon l'une des revendications 1 à 6, **caractérisé en ce que** les moyens de retenue (31) et les moyens de support (2) fermés plats sont transportés de manière cadencée à l'aide d'un cadenceur (60) dans l'ensemble (50) d'ouverture de moyens de support.

8. Procédé selon l'une des revendications 1 à 7, **caractérisé en ce que** dans une première étape d'ouverture, deux parois (4a, 4b) de moyen de support disposées l'une en face de l'autre sont séparées et dans une deuxième étape d'ouverture, le moyen de support (2) est complètement ouvert au moyen d'un moyen d'action (57, 59, 63) qui agit dans l'espace intérieur (5) du moyen de support.

9. Procédé selon l'une des revendications 1 à 8, **caractérisé en ce que** les moyens de support (2) fermés plats sont ouverts en position suspendue.

10. Procédé selon l'une des revendications 1 à 9, **caractérisé en ce que** dans la première étape d'ouverture, deux parois (4a, 4b) de moyen de support disposées l'une en face de l'autre sont séparées l'une de l'autre au moyen de dispositifs (53) de saisie par aspiration.

11. Procédé selon l'une des revendications 1 à 10, **caractérisé en ce que** les moyens de support (2) sont transférés des moyens de retenue (31) du premier ensemble de transport (30) vers les moyens auxiliaires (3) de chargement et de transport au moyen du mécanisme de séparation (51), notamment au moyen de son dispositif (53, 55) de saisie par aspiration.

12. Procédé selon l'une des revendications 1 à 11, **caractérisé en ce que** les moyens auxiliaires (3) de chargement et de transport dans lesquels les moyens de support (2) ouverts ont été placés sont transférés vers le deuxième ensemble de transport (80) pour être transportés plus loin.

13. Dispositif d'ouverture automatique de moyens de support (2) et de placement des moyens de support (2) dans des moyens auxiliaires (3) de chargement et de transport, en particulier en vue de la mise en oeuvre du procédé selon l'une des revendications 1 à 12,
**caractérisé par**
- un ensemble (10) d'amenée de moyens de support qui amène les moyens de support (2) fermés plats extraits d'une pile (11) vers des moyens de retenue (31) d'un premier ensemble de transport (30),
- un premier ensemble de transport (30), en particulier un ensemble de transport suspendu, qui transporte les moyens de support (2) fermés plats retenus par les moyens de retenue (31) vers un ensemble (50) d'ouverture de moyens de support,
- un ensemble (50) d'ouverture de moyens de support qui ouvre les moyens de support (2) fermés plats,
- un ensemble (70) de rassemblement qui insère les moyens de support (2) dans les moyens auxiliaires (3) de chargement et de transport,
- un deuxième ensemble de transport (80) qui éloigne les moyens auxiliaires (3) de chargement et de transport dans lesquels ont été placés les moyens de support (2) ouverts.

14. Dispositif selon la revendication 13, chacun des moyens de retenue (31) est disposé sur un organe de transport (32) qui peut être déplacé sur un parcours de transport.

15. Dispositif selon l'une des revendications 13 et 14, **caractérisé en ce que** l'ensemble (50) d'ouverture de moyens de support comporte un mécanisme de séparation (51) qui sépare deux parois (4a, 4b) de moyens de support disposées l'une en face de l'autre.

16. Dispositif selon l'une des revendications 13 à 15, **caractérisé en ce que** l'ensemble (50) d'ouverture de moyens de support comporte un mécanisme (52) à moyen d'action qui présente un moyen d'action (57, 59, 63) qui agit dans l'espace intérieur (5) du moyen de transport pour ouvrir complètement les moyens de support (2).

17. Dispositif selon l'une des revendications 13 à 16, **caractérisé en ce que** le deuxième ensemble de transport est un transporteur suspendu (40).

18. Dispositif (46) de conditionnement de marchandises (1) dans des moyens de support (2), contenant un ensemble de transport (40) doté de plusieurs moyens auxiliaires de transport (43) qui reprennent des moyens de support (2) pour transporter les moyens de support (2) sur un parcours de conditionnement (K), et contenant également plusieurs emplacements de fourniture (47) disposés sur le parcours de conditionnement (K) pour délivrer les marchandises (1) dans les moyens de support (2),
**caractérisé en ce que**
l'ensemble de transport (40) est un transporteur suspendu au moyen duquel les moyens de support (2) disposés dans les moyens auxiliaires de transport (43) peuvent être transportés sur le parcours de conditionnement (K) en étant suspendus.

19. Dispositif selon la revendication 18, **caractérisé en ce que** chacun des moyens auxiliaires de transport (43) reprend plusieurs moyens de support (2).

20. Procédé de conditionnement de marchandises (1) dans des moyens de support (2) au moyen d'un dispositif (46) selon l'une des revendications 18 et 19, **caractérisé en ce que** les moyens de support (2) sont transportés sur le parcours de conditionnement (K) vers les emplacements de fourniture (47) en étant suspendus au moyen des moyens auxiliaires de transport (43).
